(19) Europäisches Patentamt
European Patent Office
Office européen des brevets

(11) EP 2 913 665 A1

(12) EUROPÄISCHE PATENTANMELDUNG

(43) Veröffentlichungstag:
02.09.2015 Patentblatt 2015/36

(51) Int Cl.:
G01N 21/89 (2006.01)          G01N 21/35 (2014.01)
G01J 3/02 (2006.01)          G01J 3/42 (2006.01)
G02F 1/35 (2006.01)

(21) Anmeldenummer: 14156712.3

(22) Anmeldetag: 26.02.2014

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Philipps-Universität Marburg
35037 Marburg (DE)

(72) Erfinder:
• Busch, Stefan F.
35037 Marburg (DE)

• Probst, Thorsten
35037 Marburg (DE)
• Gente, Ralf
35039 Marburg (DE)

(74) Vertreter: Stumpf, Peter
c/o TransMIT GmbH
Kerkrader Strasse 3
35394 Gießen (DE)

(54) Verfahren, Optik, Messeinrichtung und Messsystem für die ortsaufgelöste Terahertz-Zeitbereichsspektroskopie

(57) Die Erfindung betrifft ein Verfahren, mit dem aus Terahertz-Pulsen örtlich und zeitlich separierte Terahertz-Subpulse mit eindeutiger Zeit-Ort-Beziehung erzeugt werden, welche die Möglichkeit ortsaufgelöster Messungen mittels THz-Zeitbereichsspektroskopie eröffnen, ferner eine Messeinrichtung zur Realisierung dieses Verfahrens, aufweisend ein THz-Zeitbereichsspektrometer mit einer erfindungsgemäßen Optik zur Erzeugung solcher THz-Subpulse, ein modular aufgebautes Messsystem mit mindestens einer solchen Messeinrichtung sowie eine Verwendung des Verfahrens, der Messeinrichtung und des Messsystems zur Fehlererkennung und -lokalisierung, insbesondere zur zerstörungsfreien Inline-Qualitätskontrolle bei der kontinuierlichen industriellen Fertigung bandförmiger Endlosprodukte, z. B. Papier- und Kunststoffbahnen, mit elektromagnetischer Strahlung im THz-Bereich.

Fig. 5

EP 2 913 665 A1

## Beschreibung

### Technisches Gebiet der Erfindung

Die Erfindung betrifft ein Verfahren, eine Optik, eine Messeinrichtung und ein Messsystem für die Terahertz-Zeitbereichsspektroskopie. Sie eröffnet die Möglichkeit, ortsaufgelöste Untersuchungen mittels Terahertz-Zeitbereichsspektroskopie durchzuführen. Verfahren, Messeinrichtung und Messsystem sind zur einfachen Fehlererkennung in räumlich ausgedehnten Proben, insbesondere zur zerstörungsfreien Inline-Qualitätskontrolle bei der kontinuierlichen industriellen Fertigung bandförmiger Endlosprodukte, z. B. Papier- und Kunststoffbahnen, mit elektromagnetischer Strahlung im Terahertz-Bereich einsetzbar.

### Stand der Technik

Terahertz-Strahlung, nachfolgend als THz-Strahlung abgekürzt, bezeichnet elektromagnetische Strahlung im Frequenzbereich 0,1 THz bis 30 THz, bevorzugt im Frequenzbereich 0,2 THz bis 5 THz. Unpolare Materialien, wie z. B. Papier und eine Vielzahl von Polymeren, darunter die Massenprodukte Polyethylen (PE) und Polypropylen (PP), weisen im THz-Bereich eine hohe Transparenz auf, während polare Moleküle, z. B. $H_2O$, Terahertzstrahlung stark absorbieren, wobei die Absorption eine charakteristische Frequenzabhängigkeit aufweist.

Viele neuartige industrielle Mess- und Prüfverfahren nutzen daher die Anregung von Molekülen im THz-Bereich. Die Einsatzbreite reicht von einfachen Messungen des Wassergehalts in Proben, wofür monochromatische THz-Strahlung ausreicht, bis hin zur Identifizierung und Konzentrationsmessung von Fremdstoffen mithilfe der THz-Zeitbereichsspektroskopie (THz-TDS = THz Time Domain Spectroscopy), die breitbandige THz-Strahlung verwendet.

Limitierend für einen industriellen Routineeinsatz wirken aber die hohen Kosten industrietauglicher THz-Antennen, die gegenwärtig bei ca. 7.000 EUR/Stück liegen.

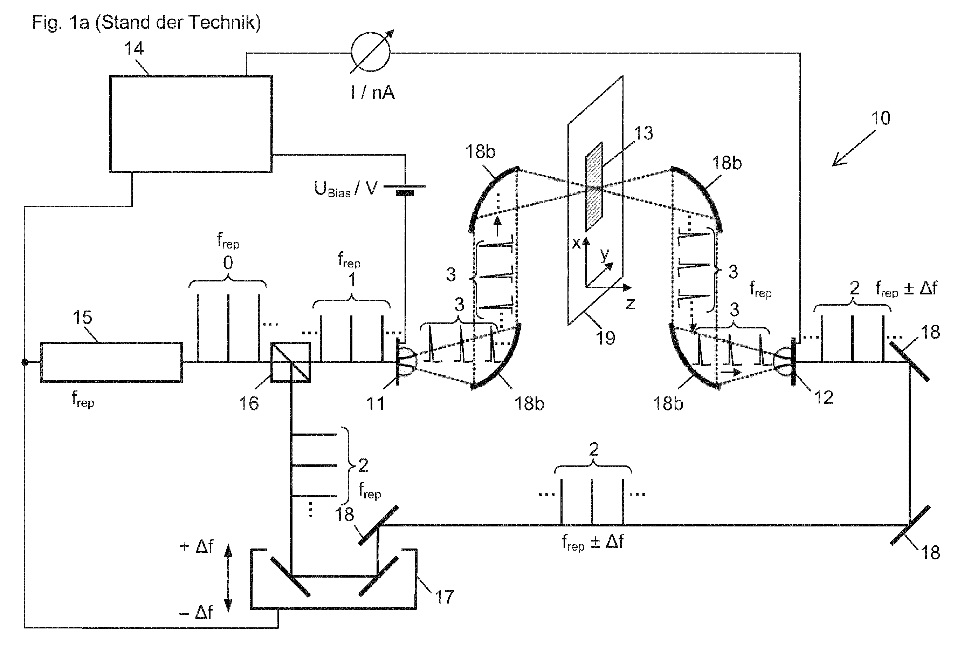

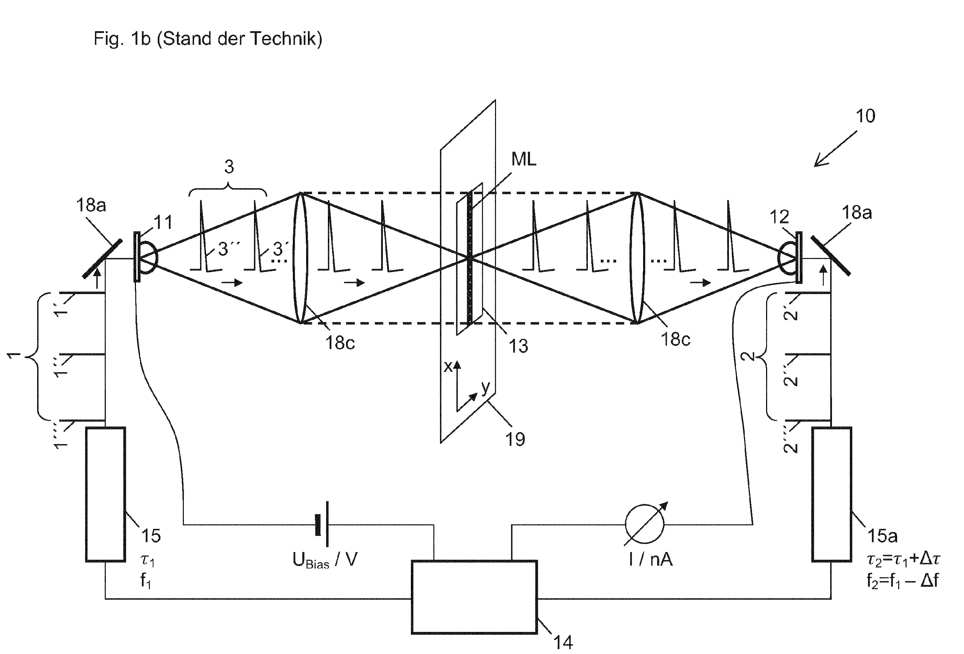

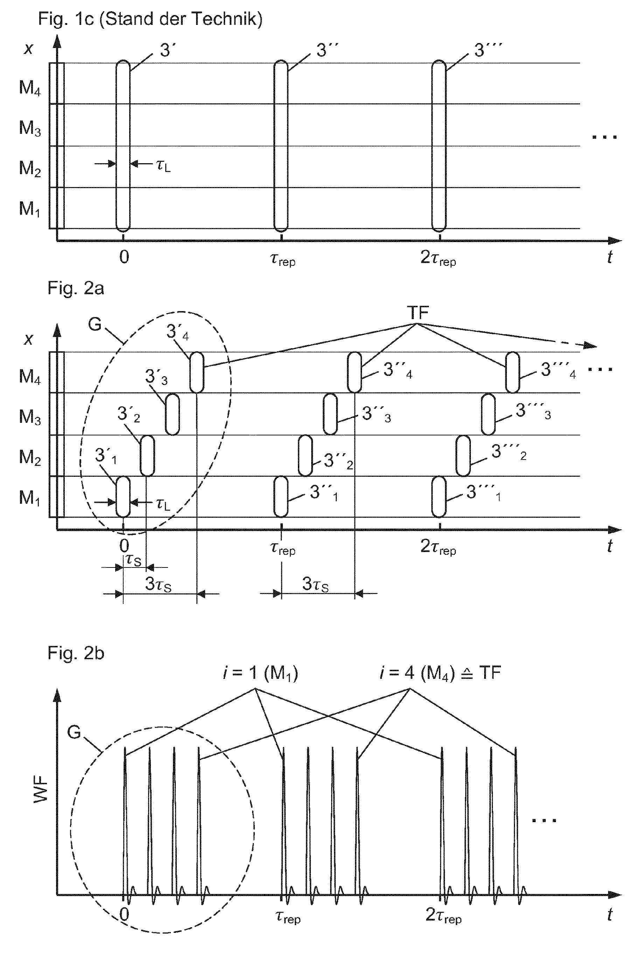

Bisherige Lösungen zur zerstörungsfreien Überwachung fließbandgefertigter Produkte mit THz-Strahlung beinhalten ein Abrastern von Messflecken über die Produktbreite hinweg. Solche Messverfahren mit nur einem THz-Antennenpaar (Sender- und Empfängerantenne) sind jedoch wegen ihres seriellen Ablaufs für eine Inline-Prozesskontrolle zu langsam. Es ist daher erforderlich, entweder ein Array aus einer Vielzahl von THz-Antennenpaaren einzusetzen, was mit unvertretbar hohen Kosten verbunden ist, oder aber, bei Anwendung des Rasterverfahrens, Abstriche bei wichtigen Parametern (Anzahl der Messflecken, spektrale Auflösung und/oder Signal-Rausch-Verhältnis) hinzunehmen. Zudem sind beim Rasterverfahren bewegliche Komponenten, z. B. ein x-y-Verschiebetisch oder Ablenkspiegel, unverzichtbar, was zu einer erhöhten Störanfälligkeit des Messsystems führt. Ein bekanntes, für das Rasterverfahren geeignetes THz-Zeitbereichsspektrometer 10 ist in Fig. 1 a dargestellt. Es weist einen Femtosekunden-Laser (fs-Laser) 15 auf, der eine Folge 0 von optischen Ausgangspulsen mit einer Repetitionsrate $f_{rep}$ erzeugt, wobei $f_{rep}$ typischerweise im Bereich von 100 MHz liegt. Ein nachfolgender Strahlteiler 16 erzeugt aus der Folge 0 von optischen Ausgangspulsen zwei miteinander korrelierte Folgen 1 von optischen Anregepulsen und 2 von optischen Abfragepulsen. Durch eine Verzögerungsstrecke 17 wird eine Verzögerungszeit zwischen zusammengehörigen, d. h. aus dem gleichen Ausgangspuls hervorgegangenen (ein Pulspaar bildenden) Pulsen beider Folgen in definierten Schritten über ein festgelegtes Zeitintervall durchgestimmt, z. B. von 0 auf 40 ps (wodurch die Folge 2 der optischen Abfragepulse eine Repetitionsrate $f_{rep}$-$\Delta f$ erhält) und zurück (wodurch die Folge 2 der optischen Abfragepulse eine Repetitionsrate $f_{rep}$+$\Delta f$ erhält). $\Delta f$ liegt typischerweise zwischen 1 kHz und 10 kHz. Die Folge 1 der optischen Anregepulse wird auf eine THz-Senderantenne 11 geleitet, wo sie eine Folge 3 von THz-Pulsen auslöst, die von einer Optik, hier bestehend aus vier off-axis-Parabolspiegeln 18b, fokussiert und dann auf eine THz-Empfängerantenne 12 geleitet werden, wo sie durch die über ebene Umlenkspiegel 18 ebenfalls auf die THz-Empfängerantenne geleiteten optischen Abfragepulse im Sampling-Verfahren abgetastet werden. Eine Steuer-, Mess- und Auswerteelektronik 14 versorgt die THz-Senderantenne 11 mit einer Bias-Spannung $U_{Bias}$ und misst mithilfe eines empfindlichen Amperemeters / das an der THz-Empfängerantenne 12 registrierte Signal. Im Fokus kann eine flächenhaft ausgedehnte Probe 13 angeordnet werden, vorzugsweise auf einem senkrecht zur THz-Strahlrichtung z ausgerichteten x-y-Verschiebetisch 19. Durch Bewegung in x- und y-Richtung kann die Probe 13 in einem zeitaufwendigen Rasterverfahren ortsaufgelöst mit THz-Strahlung untersucht werden. Die zweite zeitintensive Komponente ist die Verzögerungsstrecke 17. Insbesondere wenn eine mechanische Verzögerungsstrecke genutzt wird, ergibt sich ein hoher Zeitbedarf für THz-TDS-Messungen.

Eine bekannte, in Fig. 1b schematisch dargestellte, Lösung, die die Verzögerungsstrecke 17 in einem THz-Zeitbereichsspektrometer verzichtbar macht, ist das *Asynchronous optical sampling* (ASOPS), bei dem die miteinander korrelierten Folgen 1 und 2 der optischen Anrege- und Abfragepulse durch zwei mithilfe der Steuer-, Mess- und Auswerteelektronik 14 synchronisierte fs-Laser 15, 15a erzeugt werden, wobei die Repetitionsrate $f_1$ des fs-Lasers 15 um $\Delta f$ höher ist als die Repetitionsrate $f_2$ des fs-Lasers 15a. Somit wächst die Zeitverzögerung zwischen Anrege- und Abfragepuls aufeinanderfolgender Pulspaare linear an, solange bis der Abfragepuls soweit verzögert ist, dass er mit dem nächstfolgenden Anregepuls zusammenfällt. Dadurch wird die Zeitverzögerung auf null zurückgesetzt und ein neuer Sampling-Vorgang gestartet. Dieses Verfahren ermöglicht den Verzicht auf störanfällige mechanische Komponenten, weist jedoch wesentliche Nachteile auf. Ein erster Nachteil ist die Notwendigkeit zweier fs-Laser, was zu erhöhten Kosten für das Equipment führt. Ein weiterer Nachteil ist der sehr lange Zeitbereich, der verfahrensbedingt zu messen ist. Er wird durch die Repetitionsdauer $\tau_1 = 1/f_1$ des fs-Lasers 15 bestimmt. Bei einer typischen Repetitionsrate von $f_1 = 100$ MHz ergibt sich ein zu erfassender Zeitbereich von 10 ns, der jedoch nur in seinem vorderen, ca. 50 ps langen, Abschnitt (entsprechend einem Anteil von 0,5 % des gesamten Zeitbereichs) auswertbare Informationen enthält. Auch beim sogenannten High-Speed-ASOPS (unter Verwendung von fs-Lasern mit einer sehr hohen Repetitionsrate von ca. 1 GHz) enthalten 95 % des dann 1 ns langen Zeitbereichs keine auswertbare Information. Um diesen Nachteil zu beseitigen, wäre es möglich, sehr hochwertige fs-Laser mit noch höherer Repetitionsrate (z. B. 10 GHz) zu verwenden, was jedoch aufgrund hoher Kosten unwirtschaftlich ist. Es wird also eine alternative Lösung benötigt, die eine bessere Ausnutzung des verfügbaren Zeitbereichs erlaubt. Im Übrigen entsprechen Aufbau und Funktionsweise der Vorrichtung in Fig. 1b denen in Fig. 1a, wobei lediglich anstelle der off-axis-Parabolspiegel 18b zwei THz-Linsen 18c zur Fokussierung der THz-Strahlung gewählt wurden. Wiederum kann eine Probe 13 auf einem Verschiebetisch 19 in den Strahlengang eingebracht und in der $x$-$y$-Ebene abgerastert werden.

Es besteht die Möglichkeit, die THz-Linsen 18c durch solche zu ersetzen, mit denen eine kollimierte Strahlführung zwischen den Linsen erhalten wird (in Fig. 1b gestrichelt angedeutet). Durch Einsatz geeigneter Blenden kann so anstelle eines punktförmig fokussierten Messflecks eine sich über die gesamte Ausdehnung der Probe in $x$-Richtung erstreckende Messlinie ML erhalten werden. (Auch die Anordnung in Fig. 1a ist in dieser Weise modifizierbar.) THz-Messungen sind nun integriert über die gesamte Messlinie ML durchführbar. Das Abrastern der Probe ist somit nur noch in $y$-Richtung notwendig, wodurch die Messgeschwindigkeit drastisch erhöht wird. Ein Abrastern in $x$-Richtung ist nicht mehr erforderlich und nicht mehr sinnvoll. Offensichtlich ist aber auch, wie das Ort-Zeit-Schema in Fig. 1c verdeutlicht, dass mit solchen Anordnungen keinerlei ortsaufgelöste Messungen in $x$-Richtung möglich sind. Ein über sich die gesamte $x$-Ausdehnung der Probe erstreckender Messbereich (in Fig. 1c fiktiv aufgeteilt in 4 Messflecke $M_1$ bis $M_4$, die 4 Probenabschnitten $P_1$ bis $P_4$ zugeordnet sind) wird mit der Folge 3 der THz-Pulse bestrahlt. Die THz-Pulse 3', 3",... mit einer Länge $\tau_L$ und einer Repetitionsdauer $\tau_{rep}$ (bzw. $\tau_1$) weisen eine Ausdehnung über alle Probenabschnitte $M_1$ bis $M_5$ hinweg auf, was ortsaufgelöste Messungen in $x$-Richtung ausschließt. Die Anordnungen sind somit in dieser Form, trotz der gesteigerten Messgeschwindigkeit, für wichtige praktische Einsatzfälle, beispielsweise die Inline-Materialprüfung mittels THz-Bildgebung, unbrauchbar. Sie werden große technische Bedeutung gewinnen, wenn es gelingt, den Nachteil der fehlenden Ortsauflösung in $x$-Richtung zu beseitigen.

Eine bekannte Lösung, die eine schnelle THz-Bildgebung unter Verwendung eines einzigen THz-Sender-Empfänger-Antennenpaares ermöglicht, ist in der EP2505986A1 beschrieben. Darin wird die von einem THz-Sender emittierte "weiße" THz-Strahlung durch ein Reflexionsgitter spektral zerlegt und auf eine Fokuslinie projiziert, die sich entlang einer räumlich ausgedehnten Probe erstreckt. Somit entsteht eine eindeutige Beziehung $f(x)$ zwischen Frequenz $f$ und Ort $x$. Nach Durchlaufen der Probe wird die spektrale Zerlegung durch ein zweites Reflexionsgitter aufgehoben und die transmittierte THz-Strahlung, die nun Informationen über die Probe enthält (Absorptionskoeffizient, Brechungsindex) auf einen THz-Empfänger geleitet. Diese Lösung, die auch als *Spectrum-to-Space-Ansatz* bekannt ist (siehe S. Schumann u. a.: Spectrum to space transformed fast terahertz imaging. Opt. Express 20, 19200-19205 (2012)), weist aber wesentliche Nachteile auf:

Da sich die Frequenz der einfallenden THz-Strahlung entlang der Fokuslinie kontinuierlich ändert, werden verschiedene Punkte der Fokuslinie mit monochromatischer THz-Strahlung verschiedener Frequenz beaufschlagt. Beispielsweise beträgt die Frequenz an einem Ende der Fokuslinie 0,3 THz, am anderen Ende 0,5 THz. Eine solche Untersuchung mit monochromatischer THz-Strahlung verschiedener Frequenz ist nur dann sinnvoll, wenn in diesem Frequenzbereich Absorptionskoeffizient und Brechungsindex der Probe annähernd konstant sind. Ist das nicht der Fall, sind aufwendige Bildkorrekturen notwendig. Noch wesentlicher ist der Nachteil, dass für einen einzelnen Punkt der Fokuslinie keine spektrale Information gewonnen wird, da er nur mit einer diskreten Frequenz untersucht wird. Eine spektroskopische Analyse, die zur Identifizierung der Zusammensetzung von Fremdkörpern genutzt werden könnte, ist also nicht möglich.

**Aufgabe der Erfindung**

Aufgabe der vorliegenden Erfindung ist es, die im vorangehenden Abschnitt aufgezeigten Nachteile des Standes der Technik zu überwinden:

Es ist ein Verfahren anzugeben, das eine ortsaufgelöste THz-Zeitbereichsspektroskopie ermöglicht, die die nachteilige Frequenz-Ort-Umsetzung des *Spectrum-to-Space*-Ansatzes vermeidet, aber dessen hohe Messgeschwindigkeit beibehält.

Ferner ist eine dieses Verfahren realisierende Messeinrichtung mit einem THz-Zeitbereichsspektrometer anzugeben, die unter Verwendung eines einzigen THz-Sender-Empfänger-Antennenpaars ortsaufgelöste Messungen, d. h. Messungen an mehreren, entlang eines (quasi-1-dimensionalen) Probenstreifens oder in einem 2-dimensionalen Probenbereich örtlich separierten Messflecken, mit breitbandiger ("weißer") THz-Strahlung ermöglicht, sodass an jedem Messfleck ein vollständiges THz-Spektrum einer Probe aufzeichenbar ist. Die Messeinrichtung soll mit beliebigen Ausführungen von THz-Zeitbereichsspektrometern realisierbar sein. Insbesondere sind hier zu nennen: die weitverbreiteten THz-Zeitbereichsspektrometer mit einem fs-Laser und einer Verzögerungsstrecke sowie alle Formen von THz-Zeitbereichsspektrometern, die keine Verzögerungsstrecke benötigen, darunter:

- die im Stand der Technik genannten ASOPS-THz-Zeitbereichsspektrometer, für die eine um ein Vielfaches verbesserte Ausnutzung des zu erfassenden Zeitbereichs erzielt werden soll,
- ECOPS-THz-Zeitbereichsspektrometer (Electrically Controlled Optical Sampling),
- OSCAT-THz-Zeitbereichsspektrometer (Optical Sampling by Cavity Tuning).

Ein solches Verfahren und eine solche Messeinrichtung, vorzugsweise erweitert zu einem modular aufgebauten Messsystem mit mehreren derartigen Messeinrichtungen, fänden unter anderem bei der schnellen Inline-Prüfung von großtechnisch hergestellten Produkten, insbesondere bei der Fehlererkennung in durchlaufenden Papier- und Kunststoffbahnen eine wirtschaftlich sinnvolle Anwendung, vor allem bei der Prüfung von Bahnen großer Breite.

**Lösung der Aufgabe**

Diese Aufgabe wird erfindungsgemäß gelöst durch:

(i) ein Verfahren gemäß Anspruch 1, 2 oder 3 zur Untersuchung einer in einem THz-Strahlengang angeordneten Probe mittels THz-Zeitbereichsspektroskopie, beinhaltend die Strahlformung, vorzugsweise Kollimierung, einer Folge von THz-Pulsen und ihre anschließende Zerlegung in Gruppen mit einer vorgegebenen Anzahl $N>2$ von THz-Subpulsen, die sich in einem THz-Strahlengang in $N$ Teilfolgen auf räumlich separierten Strahlwegen bewegen und einen definierten Zeitversatz aufweisen, wobei räumlich separierter Strahlweg und Zeitversatz miteinander korreliert sind, die serielle örtliche Zusammenführung der THz-Subpulse unter Beibehaltung ihres Zeitversatzes und die Messung der $N$ Wellenformen der THz-Subpulse in den $N$ Teilfolgen durch Abtastung in einem zu messenden Zeitbereich $T$,

(ii) eine Messeinrichtung gemäß Anspruch 8 oder 9, beinhaltend ein bekanntes THz-Zeitbereichsspektrometer, das ergänzt wird durch eine erfindungsgemäße Optik gemäß einem der Ansprüche 4 bis 7 mit einer ersten strahlformenden Komponente zur Strahlformung, vorzugsweise Kollimierung, einer Folge von THz-Pulsen, einer strahlverzögernden Komponente zur Zerlegung von THz-Pulsen in Gruppen mit einer vorgegebenen Anzahl $N>2$ von THz-Subpulsen, die sich in einem THz-Strahlengang in $N$ Teilfolgen auf räumlich separierten Strahlwegen bewegen und einen definierten Zeitversatz aufweisen, wobei räumlich separierter Strahlweg und Zeitversatz miteinander korreliert sind, und einer zweiten strahlformenden Komponente zur örtlichen Zusammenführung der THz-Subpulse auf einer THz-Empfängerantenne, wobei der Zeitversatz der THz-Subpulse erhalten bleibt und somit einen eindeutigen Rückschluss auf die Lage des von einem THz-Subpuls durchlaufenen Strahlwegs zulässt, wobei die Möglichkeit besteht, eine feststehende oder bewegte Probe zum Zwecke ihrer Untersuchung mit THz-Strahlung an einer beliebigen Position in den geformten, vorzugsweise kollimierten, THz-Strahlengang zwischen den beiden strahlformenden Komponenten einzubringen,

(iii) ein modular aufgebautes Messsystem gemäß Anspruch 10 zur Untersuchung von Proben großer Ausdehnung, aufweisend mehrere, parallel unmittelbar nebeneinander angeordnete Messeinrichtungen,

(iv) die Verwendung von Verfahren, Messeinrichtung und Messsystem gemäß Anspruch 11 oder 12 zur schnellen ortsaufgelösten zerstörungsfreien Qualitätskontrolle von großtechnisch hergestellten Produkten, insbesondere zur Inline-Fehlererkennung in Papier- und/oder Kunststoff-Endlosbahnen, durch bildgebende und/oder spektroskopische Auswertung im THz-Bereich.

Bei der bildgebenden Auswertung werden die Amplituden der den Probenabschnitten eindeutig zugeordneten THz-Subpulse abgebildet, wodurch Löcher, Hohlräume oder Fremdkörper in diesen Probenabschnitten nachweisbar sind. Diese sind erkennbar an Abweichungen der Amplituden in von Fehlern betroffenen Probenabschnitten von den Amplituden benachbarter, als fehlerfrei zu betrachtender Probenabschnitte (Erhöhung z. B. im Falle von Löchern oder Hohlräumen, Verringerung im Falle von Fremdkörpern, die THz-Strahlung streuen, reflektieren oder absorbieren). Bei einer bewegten Probe sind Fehler besonders leicht erkennbar, da sie durch das THz-Bild hindurchwandern.

Bei der spektroskopischen Auswertung werden die Pulsformen der den Probenabschnitten zugeordneten THz-Subpulse einer Spektralanalyse unterzogen. Das dabei für jeden Probenabschnitt gewonnene THz-Spektrum erlaubt es, durch Vergleich mit den THz-Spektren der benachbarten Probenabschnitte Abweichungen von der vorgegebenen Zusammensetzung ortsaufgelöst zu detektieren.

Im Gegensatz zu dem aus dem Stand der Technik bekannten *Spectrum-to-Space-Ansatz,* der mit dem Verlust der spektralen Information verbunden ist, handelt es sich hier somit um einen *Time-to-Space-Ansatz,* bei dem die spektrale Information erhalten bleibt. Dieser Ansatz ermöglicht es, bekannte Auswerteverfahren, z. B. die Bildgebung bei verschiedenen Frequenzen, mit drastisch gesteigerter Geschwindigkeit durchzuführen.

Sowohl bei der bildgebenden als auch bei der spektroskopischen Auswertung sind Fehler schon an Änderungen in einzelnen Probenabschnitten im Vergleich zu den umgebenden Probenabschnitten erkennbar. Referenzmessungen sind nicht zwingend erforderlich.

Jedoch kann die Zuverlässigkeit der bildgebenden und spektroskopischen Auswertung durch Referenzmessungen (ohne Probe, d. h. Leermessung z. B. in Luft, sowie an einer nachgewiesenermaßen fehlerfreien Probe) erhöht werden.

Das Verfahren gemäß (i) und die Messeinrichtung gemäß (ii) erlauben somit ortsaufgelöste Messungen mit der THz-Zeitbereichsspektroskopie ohne Verwendung beweglicher Komponenten, indem das Messsignal örtlich aufgeteilt und zeitlich separiert wird.

Das Verfahren gemäß (i) und die Messeinrichtung gemäß (ii) umfassen mehrere Varianten zur Herstellung der eindeutigen Zeit-Ort-Beziehung der THz-Subpulse, die im nachfolgenden Abschnitt im Detail dargestellt werden.

## Detaillierte Darstellung der erfindungsgemäßen Lösung

### Erfindungsgemäßes Verfahren

Das erfindungsgemäße Verfahren eignet sich für den Einsatz in der Zeitbereichsspektroskopie, insbesondere der THz-Zeitbereichsspektroskopie. Die THz-Zeitbereichsspektroskopie ist ein kohärentes Messverfahren, basierend auf einer Folge 1 von optischen Anregepulsen 1',1",1"',... und einer Folge 2 von optischen Abfragepulsen 2',2",2"',..., die miteinander korreliert sind. Jeweils ein Anregepuls und ein Abfragepuls bilden ein Pulspaar (1',2'), (1",2"),..., wobei die Pulse eine definiert einstellbare Zeitverzögerung aufweisen. In der aus den Pulsfolgen 1 und 2 gebildeten Folge von Pulspaaren wird die Zeitverzögerung zwischen null und einem Maximalwert durchgestimmt. (Bei ASOPS-THz-TDS ist dieser Maximalwert nicht frei wählbar, sondern verfahrensbedingt durch die Repetitionsdauer des ersten fs-Lasers $\tau_1 = 1/f_1$ vorgegeben.) Die Folge 1 der optischen Anregepulse 1',1",... löst eine mit der Folge 1 korrelierte, dieselbe Repetitionsdauer aufweisende, Folge 3 von THz-Pulsen 3', 3",... aus, die durch Wechselwirkung mit einer Probe Informationen über deren Zusammensetzung und Struktur aufnehmen, die in der Wellenform der THz-Pulse gespeichert werden.

Zur Überwindung der im Stand der Technik herausgearbeiteten Nachteile, insbesondere der fehlenden Ortsauflösung bei der Verwendung geformter, vorzugsweise kollimierter, THz-Pulse mit einem linienartigen (quasi-1-dimensionalen) oder einem 2-dimensionalen Querschnitt (z. B. Kreis, Rechteck), wird das Verfahren der THz-Zeitbereichsspektroskopie erfindungsgemäß wie folgt weiterentwickelt:

Jeder in der Folge 3 enthaltene, geformte, vorzugsweise kollimierte, THz-Puls 3',3",... wird in eine Gruppe mit einer vorgegebenen Anzahl $N \geq 2$ von stufenweise zeitlich versetzten THz-Subpulsen $3'_1$, $3'_2$, $3'_3$,...,$3'_N$; $3''_1$, $3''_2$, $3''_3$,...,$3''_N$;... zerlegt, die auf $N$ räumlich separierten Strahlwegen N örtlich separierte, in einer Ebene vorzugsweise senkrecht zur Ausbreitungsrichtung der THz-Subpulse (d. h. zum THz-Strahlengang) angeordnete Messflecken durchlaufen, wobei jeder THz-Subpuls durch seinen Zeitversatz eindeutig dem von ihm durchlaufenen Messfleck $M_1$ bis $M_N$ zuzuordnen ist, sodass eine eindeutige Zeit-Ort-Beziehung erhalten wird. Der Zeitversatz zweier aufeinanderfolgender, aus demselben THz-Puls erzeugten, THz-Subpulse ist $\tau_S$. Es kann eindeutig aus dem (gesamten) Zeitversatz eines THz-Subpulses auf den zugehörigen Messfleck $M_i$ in einer Messfleckanordnung $M_1$ bis $M_N$, den dieser THz-Subpuls durchlaufen hat, rückgeschlossen werden. Aufeinanderfolgende Gruppen von THz-Subpulsen und die in ihnen enthaltenen THz-Subpulse mit demselben Index $i$ ($i = 1...N$), z. B. $3'_1$, $3''_1$, $3'''_1$,..., die denselben Messfleck $M_i$ durchlaufen, sind voneinander durch die Repetitionsdauer $\tau_{rep}$ des fs-Lasers (bzw. $\tau_1$ bei ASOPS-THz-TDS) getrennt. Die THz-Subpulse mit demselben Index $i$, die denselben (gesamten) Zeitversatz, zweckmäßigerweise festgelegt als $(i-1)\tau_S$, aufweisen, bilden somit $N$ Teilfolgen $3'_i$, $3''_i$, $3'''_i$... ($i = 1...N$), die jeweils genau einem Messfleck $M_i$ zuzuordnen sind, den sie durchlaufen. Im einfachsten Fall sind die räumlich separierten Strahlwege parallel zueinander in einer Richtung versetzt, sodass die Messflecken $M_i$ 1-dimensional entlang einer schräg, vorzugsweise senkrecht, zum THz-Strahlengang stehenden Linie angeordnet sind (in den nachfolgenden Beispielen stets in *x*-Richtung). In einem erweiterten Fall sind die räumlich separierten Strahlwege parallel zueinander in zwei unterschiedlichen Richtungen versetzt, sodass die Messflecken $M_i$ 2-dimensional in einer schräg, vorzugsweise senkrecht, zum THz-Strahlengang gerichteten Ebene angeordnet sind. Insbesondere sind die $N$ Messflecken $M_1$ bis $M_N$ in Form einer *JxK*-Matrix (mit *JxK=N*) in dieser Ebene anordenbar, es kann aber auch eine unregelmäßige 2-dimensionale Anordnung gewählt werden.

Es ist möglich, in der gewählten Ebene eine Probe zu anordnen. Ist eine Probe dort angeordnet, so definieren die Messflecken $M_1$ bis $M_N$ auf der Probe $N$ örtlich separierte Probenabschnitte $P_1$ bis $P_N$. Somit ist jede Teilfolge von THz-Subpulsen $3'_i$, $3''_i$, $3'''i$,... aufgrund ihres bekannten Zeitversatzes $(i-1)\tau_S$ eindeutig ei-

nem Probenabschnitt $P_i$ ($i$=1...$N$) zuzuordnen. Die Probe kann somit mithilfe der $N$ Teilfolgen von THz-Subpulsen ortsaufgelöst in $N$ Probenabschnitten untersucht werden.

Der Zeitversatz kann sowohl vor Durchlaufen einer Probe als auch nach Durchlaufen einer Probe hergestellt werden. Es ist ebenfalls möglich, den Zeitversatz stufenweise, d. h. zum Teil vor einer Probe, zum Teil nach einer Probe, herzustellen.

Die erfindungsgemäße Zerlegung der THz-Pulse wird für den Fall $N$=4 in Fig. 2a veranschaulicht: Die THz-Pulse (vgl. Fig. 1c) werden in Gruppen von jeweils 4, durch den Zeitversatz $\tau_S$ getrennten, THz-Subpulsen zerlegt, der THz-Puls 3' beispielsweise in die THz-Subpulse $3'_1$, $3'_2$, $3'_3$, $3'_4$, welche die gleiche Pulsdauer $\tau_L$ wie der THz-Puls 3' aufweisen. Der Zeitversatz $\tau_S$ zwischen zwei THz-Subpulsen muss so groß sein, dass sich dieselben nicht in unzulässiger Weise überlagern, d. h., er muss größer sein als das Reziproke der gewünschten spektralen Auflösung und größer als im konkreten Fall zu erwartende, durch die Probe hervorgerufene Schwankungen der Laufzeit. Typischerweise wird ein Zeitversatz $\tau_S$ zwischen 20 ps und 100 ps, bevorzugt zwischen 40 ps und 50 ps, gewählt. Ein Anwender kann, abhängig von seiner konkreten Messaufgabe, auch einen kleineren Zeitversatz (z. B. für Übersichtsmessungen an einer sehr großen Anzahl $N$ von Messflecken/Probenabschnitten, was schnelle Messungen der Amplitude von $N$ THz-Subpulsen erfordert) oder einen größeren Zeitversatz (z. B. zur Gewinnung von THz-Spektren mit hoher Auflösung an einer geringen Anzahl $N$ von Messflecken/Probenabschnitten) wählen.

Die THz-Subpulse werden nach Durchlaufen der Probe und Herstellung des vollständigen Zeitversatzes wieder örtlich zusammengeführt, wobei ihr Zeitversatz erhalten bleibt. Die THz-Subpulse sind nun auf einer Zeitachse seriell angeordnet, wie Fig. 2b, eine schematische Darstellung der Wellenformen der THz-Subpulse, veranschaulicht. Jeder THz-Subpuls ist eindeutig einem der Messflecken $M_1$ bis $M_4$ und damit einem der Probenabschnitte $P_1$ bis $P_4$ zuordenbar.

Fig.2a und 2b veranschaulichen in Verbindung mit Fig. 1c an jeweils einem Beispiel auch die Verwendung der Begriffe Gruppe und Teilfolge: Der THz-Puls 3' wird in die Gruppe G mit den THz-Subpulsen $3'_1$, $3'_2$, $3'_3$, $3'_4$ zerlegt. Die THz-Subpulse $3'_4$, $3''_4$, $3'''_4$ aus aufeinanderfolgenden Gruppen bilden den Anfang der (aus einer sehr großen Anzahl von THz-Subpulsen bestehenden) Teilfolge mit dem Index $i$=4, bezeichnet mit TF, die den zugehörigen, mit dem Index $i$=4 bezeichneten Messfleck durchläuft.

Die im Zeitbereich seriell angeordneten $N$ Wellenformen der THz-Subpulse der $N$ Teilfolgen werden in aus dem Stand der Technik bekannter Weise quantitativ erfasst, indem sie mithilfe der (weitaus kürzeren) optischen Abfragepulse 2',2",... punktweise abgetastet werden (Sampling-Verfahren), wobei ihre Amplituden- und Phaseninformation gewonnen wird. Die so gemessenen Wellenformen werden mit aus dem Stand der Technik bekannten Methoden ausgewertet. Aufgrund der bekannten Zeit-Ort-Beziehung ist jeder THz-Subpuls dem Probenabschnitt $P_i$, dessen Information er enthält, eindeutig zugeordnet. In einem einzigen Messvorgang werden also $N$ örtlich separierte Probenabschnitte $P_i$ untersucht und somit ortsaufgelöste Informationen über eine Probe gewonnen. Unterschiede zwischen den Wellenformen der einzelnen Probenabschnitte $P_i$ weisen auf Inhomogenitäten und Fehler in der Probe hin.

**Erfindungsgemäße Messeinrichtung und erfindungsgemäße Optik**

Die erfindungsgemäße Messeinrichtung umfasst ein THz-Zeitbereichsspektrometer 10 für Transmissionsmessungen, das alle bekannten Ausführungsformen haben kann. Es kann z. B. die übliche Ausführung mit einem fs-Laser 15 und einer mechanischen Verzögerungsstrecke 17 oder aber eine Ausführung mit zwei fs-Lasern 15, 15a (z. B. ein ASOPS-THz-Zeitbereichsspektrometer) aufweisen. Dieses bekannte THz-Zeitbereichsspektrometer wird erfindungsgemäß durch eine Optik 20 erweitert, welche die Zerlegung von THz-Pulsen in $N \geq 2$ sich auf räumlich separierten Strahlwegen bewegende, definiert zeitlich versetzte THz-Subpulse gewährleistet.

Diese erfindungsgemäße Optik 20 besteht aus zwei strahlformenden Komponenten 21 und 23 und einer strahlverzögernden Komponente 22.

Die erste strahlformende Komponente 21 dient dazu, die von einer THz-Senderantenne 11 emittierte divergente THz-Strahlung zu formen, vorzugsweise zu kollimieren, und ihr einen geeigneten Strahlquerschnitt zu geben. Soll eine Ortsauflösung in nur einer Richtung, z. B. quer zur Bewegungsrichtung einer Probe, erzielt werden, so eignet sich ein Strahlquerschnitt in Form eines schmalen Rechtecks, dessen längere Seite L mindestens die Breite B des zu untersuchenden Probenbereiches besitzt. Soll eine Ortsauflösung in zwei Richtungen erzielt werden, z. B. zur Untersuchung einer rechteckigen Probe, so eignet sich ein Strahlquerschnitt, der mindestens die Abmessungen der Probe aufweist.

Die strahlformende Komponente 21 ist transmittierend oder reflektierend, d. h. als THz-Linse 21 a oder als THz-Spiegel 21 b ausführbar. Um den gewünschten Strahlquerschnitt zu erzielen, werden geeignete THz-Linsen- bzw. -Spiegelausschnitte verwendet.

Die im kollimierten THz-Strahl anzuordnende strahlverzögernde Komponente 22 ist ebenfalls als transmittierende Komponente 22a oder als reflektierende Komponente 22b ausführbar. Ihre Abmessungen werden so gewählt, dass der geformte, vorzugsweise kollimierte, THz-Strahl mit seinem gesamten Querschnitt auf die strahlverzögernde Komponente 22a bzw. 22b trifft. Im Falle einer Transmissionsanordnung trifft der THz-Strahl vorzugsweise senkrecht (unter dem Einfallswinkel $\alpha$=0) auf die transmittierende Komponente 22a, welche mindestens die Breite *L* aufweisen muss. Im Falle einer Reflexionseinrichtung trifft der THz-Strahl schräg (unter dem Einfallswinkel α) auf die reflektierende Komponente 22b, die mindestens die die Breite *L*/cos α aufweisen muss. Bevorzugt wird ein kleiner Einfallswinkel α gewählt (α<10°).

Sowohl eine transmittierende 22a als auch eine reflektierende strahlverzögernde Komponente 22b sind als Stufenkeil mit *N* Stufen ausführbar. Sie unterziehen den THz-Strahl einem sich an den Stufen sprunghaft ändernden (somit ortsabhängigen) Zeitversatz, wodurch die den THz-Strahl bildenden THz-Pulse in *N* definiert zeitlich versetzte THz-Subpulse, die auf räumlich separierten Strahlwegen verlaufen, zerlegt werden. Dabei sind die *N* Stufen im einfachsten Fall äquidistant entlang einer schräg zum THz-Strahlengang gerichteten Linie angeordnet, sodass eine 1-dimensionale Anordnung von *N* Messflecken M$_1$,..., M$_N$ erhalten wird. Jedoch ist in einfacher Weise eine Erweiterung auf den 2-dimensionalen Fall möglich, z. B. indem *K* 1-dimensionale Stufenkeile mit jeweils *J* Stufen nebeneinander angeordnet werden und einen 2-dimensionalen Stufenkeil mit *N*=*J*x*K* Stufen bilden. Die Stufen sind dann in einer schräg zum THz-Strahlengang gerichteten Ebene angeordnet. Im Falle eines transmittierenden Stufenkeils 22a sind Linie bzw. Ebene vorzugsweise senkrecht zum THz-Strahlengang gerichtet. Im Falle eines reflektierenden Stufenkeils 22b sind Linie bzw. Ebene vorzugsweise um einen kleinen Einfallswinkel α gegenüber dem THz-Strahlengang geneigt. Der THz-Strahlengang wird somit durch den reflektierenden Stufenkeil um einen Winkel 2α umgelenkt.

Eine reflektierende strahlverzögernde Komponente 22b ist, statt in Form eines massiven 1- oder 2-dimensionalen Stufenkeils, vorteilhafterweise stets auch als Anordnung von THz-Spiegeln, die die Positionen der reflektierenden Flächen des Stufenkeils einnehmen, ausführbar.

Bei Verwendung einer transmittierenden Komponente 22a resultiert der Zeitversatz aus der unterschiedlichen optischen Weglänge (und damit Ausbreitungsgeschwindigkeit) des THz-Strahls innerhalb und außerhalb der transmittierenden Komponente 22a (bei gleicher geometrischer Weglänge). Dazu weist die transmittierende Komponente 22a im THz-Bereich einen vom Brechungsindex der Umgebung $n_U$ abweichenden Brechungsindex *n* auf. In praktischen Anwendungsfällen ist $n_U$=1 (Umgebung aus Luft bestehend), während der Brechungsindex der transmittierenden Komponente 22a *n*>1 ist. Die Differenz $\Delta n$=$n$-$n_U$ sollte möglichst groß sein.

Bei Verwendung einer reflektierenden Komponente 22b wird der Zeitversatz dagegen durch eine stufenweise Änderung der geometrischen Weglänge des THz-Strahls realisiert.

Die zweite strahlformende Komponente 23 dient dazu, die die THz-Subpulse unter Beibehaltung ihres Zeitversatzes auf eine THz-Empfängerantenne 12 zu fokussieren. Sie kehrt also die Wirkung der ersten strahlformenden Komponente 21 gerade um und kann deshalb eine mit dieser identische Ausführung haben. Wie die erste strahlformende Komponente 21 ist sie transmittierend oder reflektierend, d. h. als THz-Linse 23a oder als THz-Spiegel 23b, ausführbar. Wie bei der ersten strahlformenden Komponente 21 genügt es, anstelle von Vollkörpern geeignete Ausschnitte der THz-Linse 23a bzw. des THz-Spiegels 23b einzusetzen.

Bevorzugt werden in der Optik 20 zwei identische THz-Linsen 21a, 23a oder zwei identische THz-Spiegel 21b, 23b eingesetzt. Es ist aber auch möglich, zwei THz-Linsen 21a, 23a mit unterschiedlichen Brennweiten einzusetzen, ebenso zwei THz-Spiegel 21b, 23b mit unterschiedlichen Brennweiten. Ferner können in der Optik 20 auch ein THz-Spiegel und eine THz-Linse kombiniert werden (THz-Spiegel 21b mit THz-Linse 23a oder THz-Linse 21a mit THz-Spiegel 23b). Die Begriffe THz-Linse und THz-Spiegel beziehen sich in diesem und dem nachfolgenden Absatz sowohl auf derartige Komponenten als Ganzes als auch auf die oben beschriebenen Linsen- und Spiegelausschnitte.

Bevorzugt ist die Ausführung der strahlformenden Komponenten 21a und 23a als Fresnellinsen, da diese auch bei großem Durchmesser eine geringe Dicke aufweisen, was zu einer niedrigen Absorption beiträgt. Andere Optiken sind ebenfalls einsetzbar.

Eine als 1-dimensionaler Stufenkeil ausgeführte transmittierende Komponente 22a ist wie folgt zu dimensionieren: Die Breite $B_S$ der Stufen im Stufenkeil ergibt sich aus der Breite *B* des zu untersuchenden Probenbereiches, dividiert durch die gewählte Anzahl *N* der örtlich separierten Messflecke, also $B_S$=*B*/*N*. Die Höhe $H_S$ der Stufen (präziser: die Höhendifferenz benachbarter Stufen) bewirkt den erwünschten Zeitversatz $\tau_S$ der benachbarte Stufen durchlaufenden THz-Subpulse, der, wie oben erläutert, abhängig von der Messaufgabe zwischen 20 ps und 100 ps gewählt wird. Die dazu erforderliche Stufenhöhe ist berechenbar nach der Formel

$$H_S = c \cdot \tau_S / \Delta n \quad (1),$$

wobei $\Delta n = n - n_U$ die Differenz der Brechungsindizes des für den Stufenkeil verwendeten Materials und des umgebenden Mediums (in der Regel Luft) ist.

Soll z. B. ein Zeitversatz zweier aufeinanderfolgender THz-Subpulse von $\tau_S$=40 ps mit einem Material mit dem Brechungsindex *n*=1,4 erzeugt werden, so wird eine Stufenhöhe $H_S$=3 cm benötigt. Um damit z. B. eine Zerlegung in *N*=4 THz-Subpulse zu realisieren, wird somit ein 4-stufiger Stufenkeil 22a benötigt, dessen maximale Höhe (an der obersten Stufe) 12 cm beträgt. Die Erweiterung zu einem 2-dimensionalen Stufenkeil ist leicht möglich: Im einfachsten Fall wird ein zweiter 4-stufiger Stufenkeil mit Höhen von 15 cm bis 24 cm direkt benachbart zu dem vorab beschriebenen Stufenkeil angeordnet, sodass *N*=8 Stufen in Form einer 4x2-Matrix erhalten werden. Ein Nachteil solcher transmittierender Stufenkeile ist ihre mit wachsender Höhe zunehmende Absorption.

Dieser Nachteil ist vermeidbar, indem die strahlverzögernde Komponente 22 als reflektierender Stufenkeil 22b oder als Anordnung von THz-Spiegeln ausgeführt wird.

Eine als 1-dimensionaler Stufenkeil ausgeführte reflektierende Komponente 22b ist wie folgt zu dimensionieren: Die Breite $B_S$ der Stufen im Stufenkeil ergibt sich (wie bei einer transmittierenden Komponente 22a) aus der Breite $B$ des zu untersuchenden Probenbereiches, dividiert durch die gewählte Anzahl $N$ der örtlich separierten Messflecke, also $B_S=B/N$. Unter der Voraussetzung kleiner Einfallswinkel ($\alpha<10°$, d. h. $\cos\alpha \approx 1$) ist der Zusammenhang zwischen der Höhe $H_S$ der Stufen und dem Zeitversatz $\tau_S$ hier berechenbar nach der Formel

$$H_S = c \cdot \tau_S / 2 \qquad (2).$$

Soll z. B. ein Zeitversatz zweier aufeinanderfolgender THz-Subpulse von $\tau_S=40$ ps erzeugt werden, so wird eine Stufenhöhe $H_S=6$ mm benötigt. Um damit z. B. eine Zerlegung in $N=4$ THz-Subpulse zu realisieren, wird somit ein 4-stufiger Stufenkeil 22b benötigt, dessen maximale Höhe (an der obersten Stufe) 24 mm beträgt.

Weitere Modifikationen beider Ausführungen 22a und 22b der Stufenkeile sind möglich. Z. B. müssen die Stufen solcher Stufenkeile nicht zwingend gleiche Breiten $B_S$ und Höhen $H_S$ aufweisen, woraus sich eine lineare Beziehung zwischen der Position der Messflecke und dem Zeitversatz der sie durchlaufenden THz-Subpulse ergibt. Vielmehr können Stufen unterschiedlicher Breite $B_S$ (woraus Messflecke unterschiedlicher Breite resultieren) und Höhe $H_S$ (woraus unterschiedliche Zeitversätze und unterschiedliche spektrale Auflösungen resultieren) verwendet werden. Durch solche Modifikationen kann der Anwender die Form des Stufenkeils 22a für spezielle Messaufgaben anpassen, muss aber ggf. auch Korrekturen des Messsignals vornehmen, beispielsweise eine Normierung aufgrund der unterschiedlichen Stufen- und damit Messfleckbreiten.

Ferner können die Stufen im Stufenkeil in beliebiger Reihenfolge angeordnet sein, sodass die ortsaufgelöste Probeninformation über die separaten Messflecke im Messsignal in der entsprechenden beliebigen zeitlichen Reihenfolge erscheint, was aber für praktische Anwendungen nicht sinnvoll ist.

Da der Zeitversatz verfahrensgemäß sowohl vor Durchlaufen der Probe als auch nach Durchlaufen der Probe realisierbar ist, kann eine zu untersuchende Probe 13 sowohl zwischen der strahlformenden Komponente 21 und der strahlverzögernden Komponente 22 als auch zwischen der strahlverzögernden Komponente 22 und der strahlformenden Komponente 23 angeordnet sein. Die strahlverzögernde Komponente 22 kann auch in zwei oder mehr Teilkomponenten aufgeteilt werden, die sich zwischen den strahlformenden Komponenten 21 und 23 befinden. Eine Probe 13 kann an einer beliebigen Position zwischen den strahlformenden Komponenten 21 und 23 angeordnet werden. In einer vorteilhaften Ausgestaltung der Optik 20 wird die strahlverzögernde Komponente 22 in eine der strahlformenden Komponenten 21 oder 23 integriert. Ist die strahlverzögernde Komponente 22 in mehrere Teilkomponenten aufgeteilt, so können Teilkomponenten in beide strahlformenden Komponenten 21 oder 23 integriert sein.

In einer weiteren vorteilhaften Ausgestaltung werden in die Optik 20 THz-Spiegel eingefügt, die den THz-Strahlengang in der Optik 20 mehrfach umlenken und es gestatten, die Optik 20 sehr kompakt auszuführen. Vorteilhaft ist dabei eine 2-fache Strahlumlenkung unter Verwendung von zwei THz-Spiegeln 31 und 32 oder aber eine 4-fache Strahlumlenkung unter Verwendung von vier THz-Spiegeln 31, 32, 33, 34. In einer besonders vorteilhaften Ausgestaltung werden diese THz-Spiegel in streifenartig oder matrixartig räumlich versetzte Segmente $31_i$, $32_i$, $33_i$, $34_i$ ($i$=1...$N$) zerlegt, die $N$ unterschiedliche lange geometrische Strahlwege bewirken. Auf die Spiegelanordnung auftreffende, geformte THz-Pulse werden dann in Gruppen mit $N$ unterschiedlich zeitversetzten THz-Subpulsen zerlegt, sodass eine 1-dimensionale (bei streifenartiger Versetzung der THz-Spiegel) oder 2-dimensionale Ortsauflösung (bei matrixartiger Versetzung der THz-Spiegel) realisiert wird. Die Spiegelanordnung, die auch in Form von reflektierenden Stufenkeilen ausführbar ist, wirkt in diesem Fall gleichzeitig als strahlumlenkende und als strahlverzögernde Komponente.

Hinsichtlich der Strahlformung sei auf die Möglichkeit hingewiesen, statt einer kollimierten eine trapezartige Strahlformung zu wählen. In diesem Fall sind strahlformende Komponenten 21 a und 23a mit unterschiedlichem Durchmesser erforderlich, während sie bei kollimierter Strahlführung identisch ausführbar sind. Eine so gestaltete Optik 20 würde nur teurer, ohne einen zusätzlichen technischen Vorteil zu bieten. Lediglich bei von außen auferlegten geometrischen Beschränkungen wäre sie sinnvoll anwendbar.

Die Optik 20 ist nicht nur in der hier beschriebenen Messeinrichtung in Verbindung mit einem THz-Zeitbereichsspektrometer einsetzbar, sondern mit anderen Messeinrichtungen, z. B. für Ultraschall-Untersuchungen im Zeitbereich, kombinierbar.

Das modular aufgebaute Messsystem kann über eine zentrale Steuer-, Mess- und Auswerteelektronik verfügen, die mit der erforderlichen Anzahl von Messeinrichtungen verbunden werden kann. Alternativ kann, wie in den Abbildungen dargestellt, auch jede Messeinrichtung ihre eigene Steuer-, Mess- und Auswerteelektronik 14 aufweisen.

**Ausführungsbeispiele**

Die folgenden Ausführungsbeispiele verdeutlichen die Überwindung der Nachteile des Standes der Technik durch die erfinderische Lösung, die als *Time-to-Space-Ansatz* charakterisiert werden kann. Insbesondere wird dargestellt, wie mit diesem Ansatz schnelle ortsauflösende THz-TDS-Messungen realisiert werden.

Ausführungsbeispiel 1 beschreibt eine erfinderische Messeinrichtung mit einem THz-Zeitbereichsspektrometer, das eine in Transmission betriebene erfinderische Optik zur Zerlegung von räumlich ausgedehnten THz-Pulsen in definiert zeitversetzte THz-Subpulse aufweist.

Die Ausführungsbeispiele 2 und 3 beschreiben erfinderische Messeinrichtungen mit THz-Zeitbereichsspektrometern, die zwei wesentlich verschiedene Varianten einer erfinderischen Optik aufweisen, und Reflexion und Transmission in Kombination zur Zerlegung von räumlich ausgedehnten THz-Pulsen in definiert zeitversetzte THz-Subpulse nutzen.

Ausführungsbeispiel 4 beschreibt eine besonders vorteilhafte Ausgestaltung der Messeinrichtung durch Verbindung mit einem ASOPS-THz-Zeitbereichsspektrometer, die es erlaubt, ortsauflösende Messungen mit einem stark verringerten Zeitaufwand auszuführen.

Ausführungsbeispiel 5 beschreibt besonders kompakt gestaltete Ausführungsformen der erfindungsgemäßen Optik 20, die durch THz-Umlenkspiegel realisiert werden. Zudem werden bevorzugte Ausführungsformen gezeigt, bei denen die THz-Spiegel in örtlich versetzte Segmente zerlegt werden, sodass die Spiegelanordnung sowohl strahlumlenkend als auch strahlverzögernd wirkt und somit auch zur Herstellung räumlich separierter, definiert zeitversetzter THz-Subpulse für ortsauflösende Messungen einsetzbar ist.

Ausführungsbeispiel 1

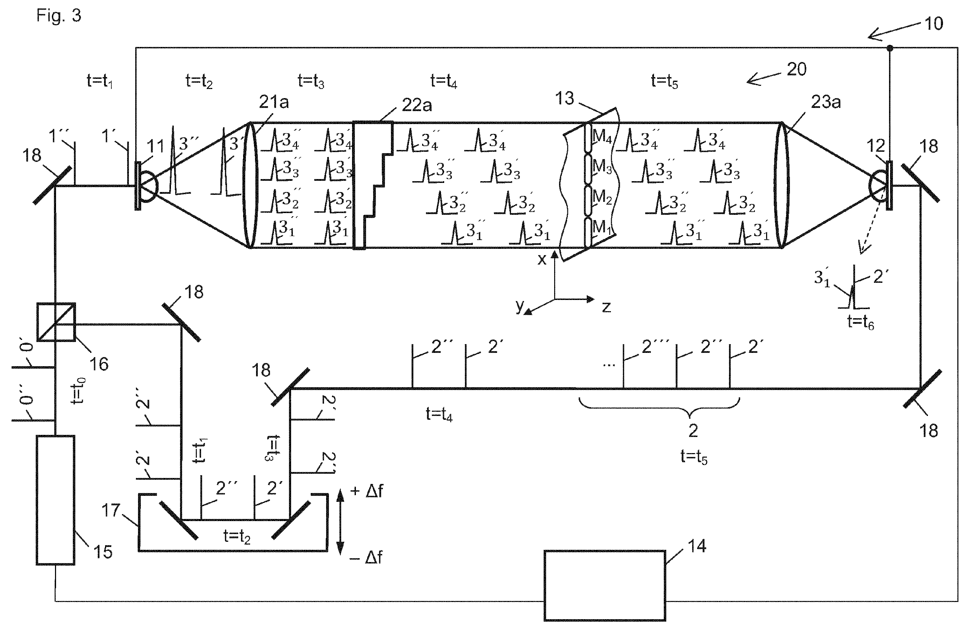

In diesem Beispiel beinhaltet eine in Fig. 3 schematisch dargestellte erfinderische Messeinrichtung ein herkömmliches THz-Zeitbereichsspektrometer 10 mit mechanischer Verzögerungsstrecke 17, das mit einer erfindungsgemäßen Optik 20 ausgestattet ist.

Das THz-Zeitbereichsspektrometer 10 umfasst einen Femtosekundenlaser 15 (fs-Laser), einen Strahlteiler 16, mehrere Ablenkspiegel 18 zur Lenkung der optischen Pulsfolgen 0, 1, 2, eine THz-Senderantenne 11, eine THz-Empfängerantenne 12 sowie eine Steuer-, Mess- und Auswerteelektronik 14. Zwischen der THz-Senderantenne 11 und der THz-Empfängerantenne 12 ist die erfindungsgemäße Optik 20 angeordnet. Sie umfasst eine erste strahlformende Komponente 21 a, eine strahlverzögernde Komponente 22a und eine zweite strahlformende Komponente 23a. Zwischen der strahlverzögernden Komponente 22a und der zweiten strahlformenden Komponente 23a kann eine (nicht als Bestandteil der Messeinrichtung zu betrachtende) Probe 13 angeordnet werden, die feststehend oder beweglich sein kann. Vorteilhaft ist es, wenn die Probe 13 senkrecht zur Zeichenebene in Fig. 3 bewegt werden kann, dort als *y*-Richtung gekennzeichnet. Beispielsweise kann ein in *y*-Richtung durchlaufendes Endlosband als Probe 13 verwendet werden.

Die strahlverzögernde Komponente 22a ist als Stufenkeil mit einer Grundfläche von 40 cm x 10 cm ausgeführt. Er besteht aus dem Polymer TPX mit einem im THz-Bereich konstanten Brechungsindex $n$=1,46 und verfügt über 4 entlang einer Linie angeordnete Stufen mit einer Stufenhöhe von 1,63 cm. Gemäß Formel (1) bedingt diese Stufenhöhe eine Zeitverzögerung von 25 ps.

Wirkungsweise der Messeinrichtung:

Der fs-Laser 15 erzeugt eine Folge 0 optischer Ausgangspulse 0', 0",... mit einer Repetitionsrate $f_1$ = 100 MHz, entsprechend einer Repetitionsdauer $\tau_1$ = 10 ns. Die optischen Ausgangspulse 0', 0",... sind kurze infrarote Laserpulse mit 100 fs Dauer und einer Wellenlänge von 1550 nm. Der Strahlteiler 16 zerlegt die Folge 0 optischer Ausgangspulse 0', 0",... in eine Folge 1 optischer Anregepulse 1', 1",... und eine Folge 2 optischer Abfragepulse 2', 2",..., sodass Paare (1',2'), (1",2"),... zeitlich miteinander korrelierter Pulse erhalten werden.

Die Folge 1 der optischen Anregepulse 1', 1",... wird auf die THz-Senderantenne 11 geführt, die dadurch zur Aussendung einer Folge 3 von THz-Pulsen 3', 3",... angeregt wird. Die Folge 3 der THz-Pulse 3', 3",... weist ebenfalls die Repetitionsdauer $\tau_1$ = 10 ns auf, jedoch haben die THz-Pulse 3', 3",... eine Dauer von 10 ps, sind also wesentlich länger als die optischen Anregepulse 1', 1 ",...

Die von der THz-Senderantenne 11 ausgehenden, divergenten THz-Pulse 3', 3",... werden auf die Optik 20 geführt. Sie treffen zunächst auf die als Linsenausschnitt ausgeführte erste strahlformende Komponente 21 a, welche die THz-Pulse kollimiert und ihnen ein rechteckiges Strahlprofil der Länge **L** = 40 cm und der Höhe **D** = 10 cm aufprägt. Danach treffen sie senkrecht auf die strahlverzögernde Komponente, den Stufenkeil 22a, der das gesamte Strahlprofil abdeckt. Der Stufenkeil zerlegt die THz-Pulse 3',3",... in Gruppen von jeweils 4 relativ zueinander um $\tau_S$= 25 ps versetzten THz-Subpulsen $3'_1$, $3'_2$, $3'_3$, $3'_4$; $3"_1$,...,$3"_4$;... Diese durchlaufen eine im Strahlengang angeordnete Probe 13 an den örtlich separierten Messflecken $M_1$, $M_2$, $M_3$, $M_4$, und definieren dabei auf der Probe vier Probenabschnitte $P_1$ bis $P_4$, welche jeweils eine Abmessung von 10 cm x 10 cm aufweisen, sodass die Probe ortsaufgelöst untersucht wird. Danach werden die THz-Subpulse durch die zweite strahlformende Komponente 23a auf die THz-Empfängerantenne fokussiert, wo sie, getrennt durch den Zeitversatz $\tau_S$ = 25 ps, nacheinander eintreffen.

Für die ersten drei THz-Subpulse jeder Gruppe steht somit ein Zeitbereich von jeweils 25 ps zur Analyse ihrer (die Probeninformation enthaltenden) Wellenform zur Verfügung, für den vierten und letzten THz-Subpuls jeder Gruppe stünde, da die Gruppen durch die Repetitionsdauer $\tau_1$ = 10 ns getrennt sind, ein sehr viel längerer Zeitbereich zur Verfügung. Da jedoch die Amplitude der Wellenform nach 25 ps praktisch auf null abgeklungen ist, wird auch für diesen THz-Subpuls der zu analysierende Zeitbereich auf 25 ps beschränkt. Somit wird die Wellenform der vier THz-Subpulse in einem Zeitbereich $T$ = 100 ps gemessen.

Die Messung der Wellenform erfolgt mit dem hinreichend bekannten Sampling-Verfahren. Dazu wird die Folge 2 der optischen Abfragepulse 2', 2",... über die Verzögerungsstrecke 17 geführt, die durch eine Änderung der geometrischen Weglänge die Laufzeit dieser Pulse in einem Intervall zwischen 0 und 100 ps variiert, wobei die Laufzeitdifferenz der zeitlich miteinander korrelierten Pulse zweier aufeinanderfolgender Pulspaare, z. B. (1',2') und (1",2"), um die Schrittweite $\Delta\tau$ = 1 ps anwächst.. Die Folge 2 der optischen Abfragepulse 2', 2",... wird dann auf die THz-Empfängerantenne 12 geführt, welche bei Auftreffen eines Abfragepulses 2', 2",... für einen Zeitraum von ca. 500 fs freigeschaltet wird und dabei die momentane Feldstärke an einer Messposition der sich über den Zeitbereich von 100 ps erstreckenden, auf die Empfängerantenne einlaufenden Gruppe der THz-Subpulse misst. Die Messung dieser momentanen Feldstärke erfolgt an 100 aufeinanderfolgenden identischen Gruppen von THz-Subpulsen, wobei die Messposition jeweils um die Schrittweite $\Delta\tau$ = 1 ps verschoben wird. Aus diesen Einzelmessungen werden dann die Wellenformen der vier THz-Subpulse rekonstruiert. Aufgrund des bekannten Zeitversatzes kann die Wellenform jedes THz-Subpulses einem Messfleck $M_1$,..., $M_4$ und somit einem durchlaufenen Probenabschnitt $P_1$ bis $P_4$ zugeordnet werden, sodass ortsaufgelöste Informationen über die Probe erhalten werden.

Um die beschriebenen Abläufe, die durch eine Steuer-, Mess- und Auswerteelektronik 14 koordiniert werden, zu veranschaulichen, ist in Fig. 3 auch die Pulsausbreitung in der Messeinrichtung zu aufeinanderfolgenden Zeitpunkten $t$ = $t_0$ bis $t$ = $t_6$ skizziert. Zu beachten ist, dass es sich hierbei um eine rein schematische Darstellung handelt. Der Abstand der THz-Subpulse innerhalb einer Gruppe zu den Zeitpunkten $t$ = $t_4$ und $t$ = $t_5$, d. h. der Zeitversatz $\tau_S$ = 25 ps, ist übertrieben groß dargestellt, während der Abstand zweier THz-Pulse und der daraus hervorgehenden, aufeinanderfolgenden Gruppen von THz-Subpulsen (gegeben durch die Repetitionsdauer $\tau_{rep}$ = 10 ns) extrem verkürzt dargestellt ist. Diese Verzerrungen sind für die Visualisierung erforderlich.

Die Zeitpunkte $t_0$ bis $t_6$ sind durch folgende Vorgänge gekennzeichnet:

$t_0$: Zwei vom fs-Laser 15 erzeugte optische Ausgangspulse 0', 0" laufen auf den Strahlteiler 16 zu, wo sie in optische Anregepulse 1', 1" und optische Abfragepulse 2', 2" zerlegt werden.

Vorgänge, betreffend die optischen Anregepulse und die damit generierten THz-Pulse:

$t_1$: Die optischen Anregepulse 1', 1" werden auf die THz-Senderantenne 11 geleitet.

$t_2$: Die optischen Anregepulse 1', 1" haben die THz-Senderantenne 11 zur Emission zweier divergenter THz-Pulse 3', 3" angeregt, die auf die erste strahlformende Komponente 21 a geleitet werden.

$t_3$: Die THz-Pulse 3', 3" werden durch die erste strahlformende Komponente 21 a kollimiert und auf die strahlverzögernde Komponente 22a geleitet. Fig. 3 zeigt zum Zeitpunkt $t_3$ bereits eine Aufteilung der THz-Pulse 3', 3" in Gruppen mit jeweils vier auf unterschiedlichen Strahlwegen verlaufenden THz-Subpulsen $3'_1$, $3'_2$, $3'_3$, $3'_4$; $3"_1$, $3"_2$, $3"_3$, $3"_4$, die jedoch zu diesem Zeitpunkt noch rein fiktiv ist.

$t_4$: Die THz-Subpulse haben die strahlverzögernde Komponente 22a durchlaufen, wo sie einen unterschiedlichen Zeitversatz erhalten haben. Sie sind nun im Zeitbereich real getrennt.

$t_5$: Die THz-Subpulse haben die Probe 13 in unterschiedlichen Probenabschnitten/Messflecken $M_1$ bis $M_4$ durchlaufen und ortsaufgelöst Informationen über die Probe 13 aufgenommen. Sie werden nun auf die zweite strahlformende Komponente 23a geleitet, durch die sie auf die THz-Empfängerantenne 12 fokussiert werden.

Parallel ablaufende Vorgänge, betreffend die optischen Abfragepulse:

$t_1$ bis $t_5$: Die optischen Abfragepulse 2', 2" werden über die Verzögerungsstrecke 17 geführt, dabei definiert verzögert und dann weiter in Richtung der THz-Empfängerantenne 12 geleitet. Die Verzögerung wird dabei (über die gesamte Folge 2 der optischen Abfragepulse) zwischen 0 und 100 ps variiert.

$t_6$: Zu diesem Zeitpunkt erfolgt der erste Abtastschritt des Sampling-Vorgangs: Der optische Abfragepuls 2' schaltet die THz-Empfängerantenne 12 zum Zeitpunkt $t_6$ für ein kurzes Zeitintervall frei, in welchem der vorderste Ausläufer des ersten THz-Subpulses $3'_1$ auf die THz-Empfängerantenne 12 trifft. Ein erster Messpunkt der Wellenform des THz-Subpulses wird registriert.

Mit jedem Auftreffen eines weiteren Pulses 2", 2"',... der Folge 2 der optischen Abfragepulse wiederholt sich dieser Abtastschritt, wobei aufgrund der definierten Verzögerung, die schrittweise bis auf 100 ps erhöht wird, die Wellenform im gesamten, 100 ps langen, hier 4 THz-Subpulse beinhaltenden, Zeitbereich abgetastet wird.

Die in diesem Ausführungsbeispiel beschriebene Messeinrichtung kann modifiziert werden, ohne ihre Funktion zu verändern:

Insbesondere kann die als Stufenkeil ausgeführte strahlverzögernde Komponente 22a an einer beliebigen Position im kollimierten Strahlengang zwischen den strahlformenden Komponenten 21 a und 23a angeordnet sein. Sie kann sich also auch zwischen der Probe 13 und der zweiten strahlformenden Komponente 23a befinden, sodass die Zerlegung der THz-Pulse in THz-Subpulse erst nach dem Durchlaufen der Probe erfolgt. Der Stufenkeil kann auch um 180° gedreht werden, sodass die THz-Pulse auf seine gestufte Seite treffen. Es können auch mehrere Stufenkeile, deren Wirkung sich addiert, eingesetzt werden.

Ebenso sind sämtliche aus dem Stand der Technik bekannten Modifikationen möglich, z. B. kann sich die Verzögerungsstrecke auch im Pfad der optischen Anregepulse 1', 1",... befinden, sofern die Länge der optischen Pfade auf das oben beschriebene Sampling-Verfahren abgestimmt ist. Die Folge 1 der optischen Anregepulse und die Folge 2 der optischen Abfragepulse können im Freistrahl oder fasergekoppelt geführt werden.

Ausführungsbeispiel 2

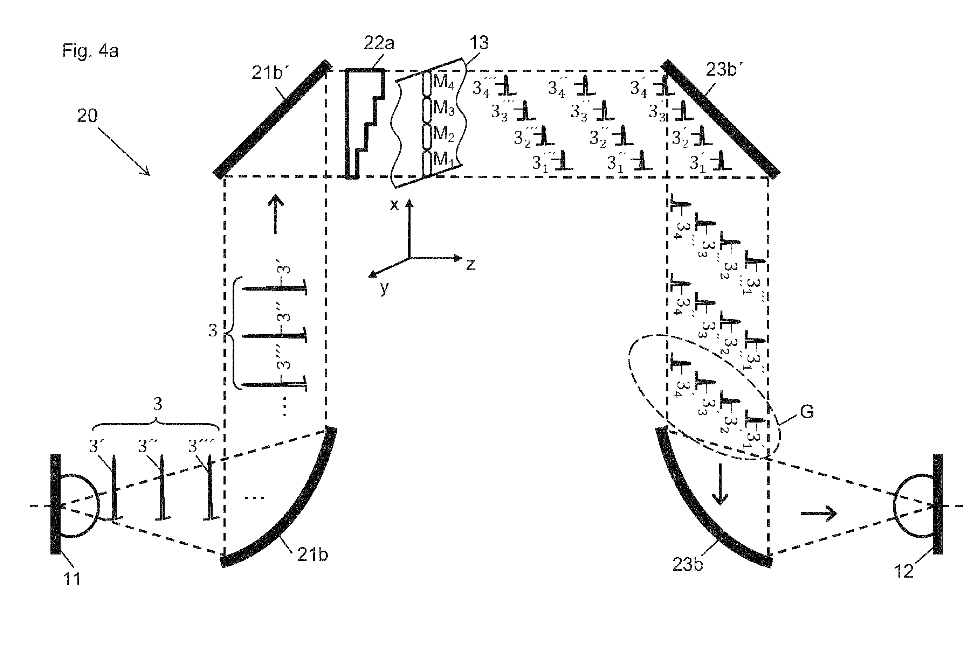

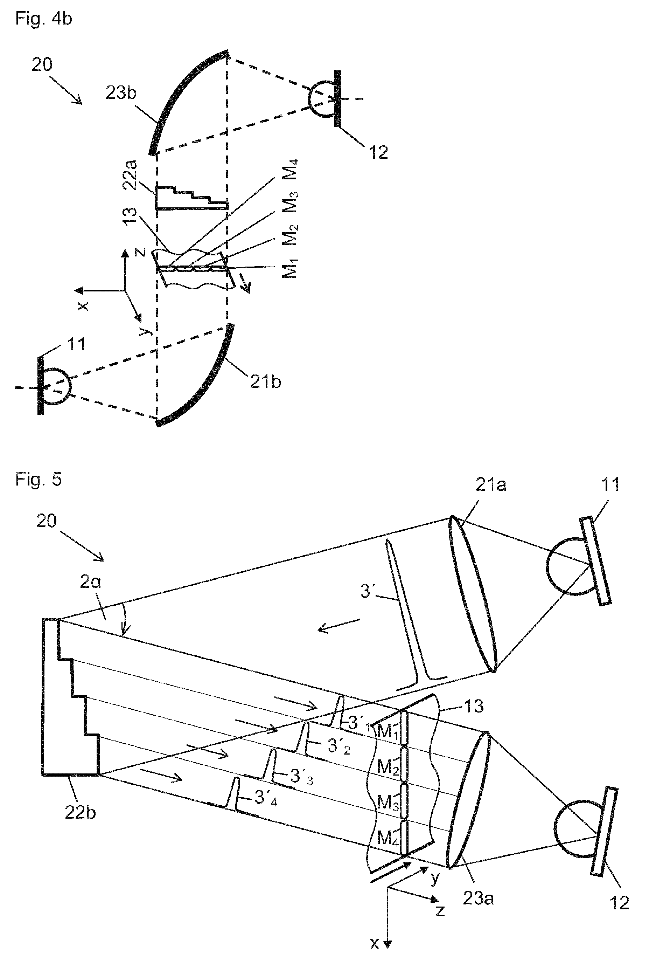

Dieses Ausführungsbeispiel betrifft eine weitere Ausgestaltung der erfinderischen Messeinrichtung, basierend hier auf einem bekannten THz-Spektrometer, bei dem die Strahlformung im Gegensatz zum Ausführungsbeispiel 1 nicht durch Linsen, sondern durch Spiegel erfolgt. Die erfinderische Optik 20, schematisch dargestellt in Fig. 4a, wird erhalten, indem zwei der im bekannten Aufbau als Parabolspiegel ausgeführte Spiegel durch ebene Umlenkspiegel ersetzt werden. Die erste strahlformende Komponente 21 besteht somit aus dem Parabolspiegel 21 b und dem Umlenkspiegel 21b', die zweite strahlformende Komponente 23 besteht aus dem Umlenkspiegel 23b' und dem Parabolspiegel 23b. Es wird somit ein kollimierter THz-Strahlengang erhalten, der sich vom Parabolspiegel 21 b über beide Ablenkspiegel 21b', 23b'bis zum Parabolspiegel 23b erstreckt. Im THz-Strahlengang zwischen den Ablenkspiegeln ist eine Probe 13 (in Fig. 4a als durchlaufendes Endlosband dargestellt) angeordnet. Die strahlverzögernde Komponente 22, wieder als Stufenkeil 22a ausgeführt, ist zwischen dem Ablenkspiegel 21b' und der Probe 13 angeordnet. Die übrigen Komponenten und die Wirkungsweise stimmen mit Ausführungsbeispiel 1 überein. Da sich die Änderungen somit auf die Optik 20 beschränken, wird in Fig. 4a lediglich der THz-Strahlengang mit den zugehörigen Komponenten dargestellt. Schematisch wird dabei auch die Zerlegung von THz-Pulsen 3', 3", 3''' in drei Gruppen von THz-Subpulsen $3'_1$, $3'_2$, $3'_3$, $3'_4$; $3''_1$, $3''_2$, $3''_3$, $3''_4$; $3'''_1$, $3'''_2$, $3'''_3$, $3'''_4$ dargestellt, wobei die Zeitabstände wie in Fig. 3 zum Zwecke der Visualisierung stark verzerrt sind. Alle in Ausführungsbeispiel 1 genannten Modifikationen sind möglich. Insbesondere sind die Probe 13 und der Stufenkeil 22a nicht an die in Fig. 4a gezeigten Postionen gebunden, sondern können beliebig im kollimierten Strahlengang positioniert werden.
Daraus resultiert unmittelbar ein in Fig. 4b dargestellter, vereinfachter Aufbau der Optik 20, bei dem die beiden ebenen Ablenkspiegel 21b', 23b'entfallen. Probe 13 und Stufenkeil 22a sind im kollimierten Strahlengang zwischen den Parabolspiegeln 21 b und 23b angeordnet, wobei ihre Positionen gegenüber Fig. 4a vertauscht wurden.
Die in Fig. 4a,b der Zweckmäßigkeit halber mit dargestellten THz-Antennen 11, 12 sind nicht als Bestandteile der Optik 20 zu betrachten. Das gilt auch für die folgenden Abbildungen.

Ausführungsbeispiel 3

Dieses Ausführungsbeispiel beschreibt eine weitere Ausgestaltung der erfinderischen Messeinrichtung, basierend auf einem bekannten THz-Spektrometer, bei der in der erfinderischen Optik 20 (Fig. 5) zwei als THz-Linsen ausgeführte strahlformende Komponenten 21 a und 23 a mit einer reflektierenden strahlverzögernden Komponente 22b, ausgeführt als Stufenkeil, kombiniert werden. Die THz-Linse 21 a kollimiert die von der THz-Senderantenne 11 emittierten THz-Pulse 3',... und lenkt sie auf den reflektierenden Stufenkeil 22b, der sie in 4 THz-Subpulse, getrennt durch den durch die gewählte Stufenhöhe vorgegebenen Zeitversatz (siehe Formel (2)), zerlegt und um den doppelten Einfallswinkel $2\alpha$ umlenkt. Die Subpulse durchlaufen dann eine Probe 13, die hier zwischen dem Stufenkeil 22b und der zweiten THz-Linse 23a, welche die THz-Subpulse auf die THz-Empfängerantenne 13 fokussiert, angeordnet ist. Auch hier ist die Position der Probe 13 im kollimierten THz-Strahl frei wählbar. Sie kann auch zwischen der ersten THz-Linse 21 a und dem Stufenkeil 22b angeordnet sein. Die äußere Beschaltung und Wirkungsweise der Messeinrichtung entspricht der Darstellung in Ausführungsbeispiel 1. Auch alle dort erwähnten Modifikationen sind möglich. Selbstverständlich können die THz-Linsen 21 a, 23a durch Parabolspiegel 21 b, 23b (wie in Ausführungsbeispiel 2 verwendet) ersetzt werden. Die Positionen von Senderantenne 11 und Empfängerantenne 12 sind dazu entsprechend anzupassen.

Ausführungsbeispiel 4

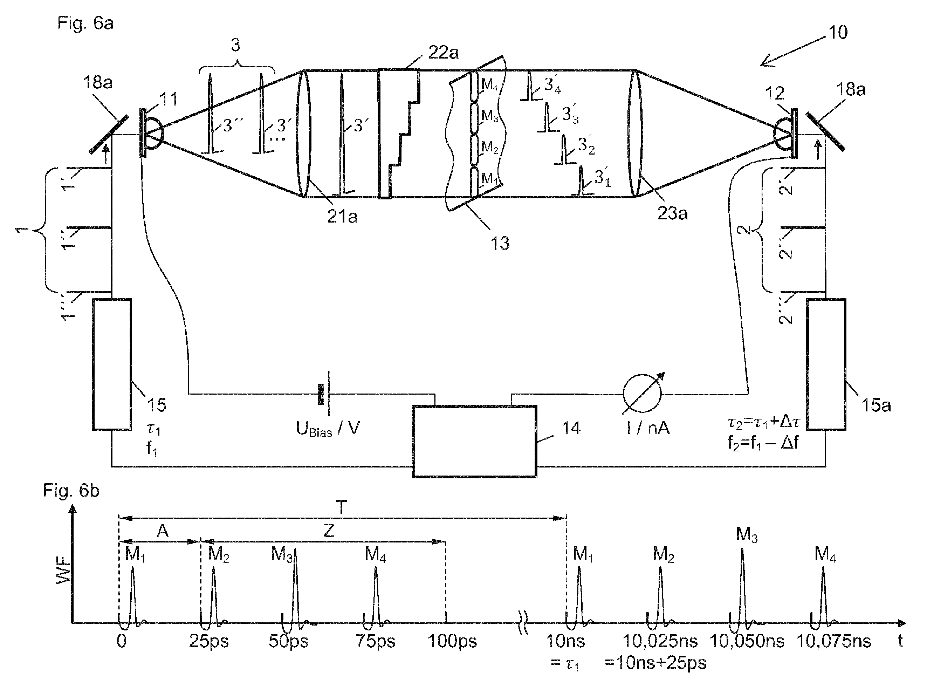

Dieses Ausführungsbeispiel beschreibt die besonders vorteilhafte Anwendung des erfindungsgemäßen Verfahrens für die ASOPS-THz-Zeitbereichsspektroskopie und die Verwendung der erfindungsgemäßen Optik 20 im THz-Strahlengang eines ASOPS-THz-Zeitbereichsspektrometers.
Eine schematische Darstellung eines so ausgestatteten ASOPS-THz-Zeitbereichsspektrometers zeigt Fig. 6a. Die Folgen 1 der optischen Anregepulse und 2 der optischen Abfragepulse werden hier durch zwei mittels einer Steuer-, Mess- und Auswerteelektronik 14 synchronisierte fs-Laser 15, 15a erzeugt, welche leicht gegeneinander verstimmt sind. Wie in den vorangehenden Ausführungsbeispielen versorgt die Steuer-, Mess- und Auswerteelektronik 14 die THz-Senderantenne 11 mit der Bias-Spannung $U_{Bias}$ und misst mithilfe des empfindlichen Amperemeters / die an der THz-Empfängerantenne 12 registrierte Feldstärke des momentanen THz-Feldes. Alle weiteren Komponenten und ihre Wirkungsweise sind aus dem Ausführungsbeispiel 1 bekannt und werden hier nicht erneut erläutert.

Der fs-Laser 15 liefert optische Anregepulse 1', 1",... mit einer Repetitionsdauer $\tau_1$=10 ns, entsprechend einer Repetitionsrate $f_1$=100 MHz. Der fs-Laser 15a liefert optische Abfragepulse 2', 2",... mit einer um $\Delta\tau$=500 fs höheren Repetitionsdauer $\tau_2$=10,0005 ns, entsprechend einer Repetitionsrate $f_2$=99,995 MHz. Die Laser sind somit um $\Delta f$=5 kHz verstimmt. Die Zeitverzögerung der Pulse in zwei aufeinanderfolgenden Pulspaaren (1',2'), (1",2"),... erhöht sich also um 500 fs. Im Zeitbereich erfolgt somit eine Abtastung mit einer Schrittweite von 500 fs. Im Gegensatz zu einer mechanischen Verzögerungsstrecke, die auch eine Verringerung der Zeitverzögerung zulässt (vgl. Ausführungsbeispiel 1), kann die Zeitverzögerung beim ASOPS-THz-Zeitbereichsspektrometer nur monoton anwachsen, bis sie (hier nach 20000 Pulspaaren) die Repetitionsdauer $\tau_1$ erreicht und, da wieder ein Anrege- mit einem Abfragepuls zusammenfällt, auf null zurückgesetzt wird. Es ist somit verfahrensbedingt unvermeidlich (wie in Fig. 6b veranschaulicht), einen extrem langen Zeitbereich $T$ der Länge $\tau_1$=10 ns abzutasten, obwohl dieser nur in seinem vorderen Teil eine auswertbare spektrale Information enthält. Bei einem aus dem Stand der Technik bekannten ASOPS-Spektrometer wäre lediglich eine einzige Wellenform (die Wellenform der THz-Pulse 3', 3", 3"',...) abzutasten, deren wesentliche Information im Bereich $0 \leq t < 25$ ps (in Fig. 6b mit $A$ bezeichnet) enthalten ist. Somit wären nur 0,25 % des 10 ns langen abgetasteten Bereichs auswertbar. Zudem enthält diese Wellenform die gesamte, über die Probenabschnitte $P_1$ bis $P_4$, die den Messflecken $M_1$ bis $M_4$ zugeordnet sind, integrierte Information. Eine Ortsauflösung ist nicht realisierbar. Das mit der erfinderischen Optik 20 ausgestattete ASOPS-THz-Zeitbereichsspektrometer zerlegt die THz-Pulse 3', 3", 3"',... in Gruppen mit jeweils vier definiert zeitversetzten THz-Subpulsen 3'$_1$, 3'$_2$, 3'$_3$, 3'$_4$; 3"$_1$, 3"$_2$, 3"$_3$, 3"$_4$; 3"'$_1$, 3"'$_2$, 3"'$_3$, 3"'$_4$;..., welche die zu untersuchende Probe örtlich getrennt in den Messflecken $M_1$ bis $M_4$, die den Probenabschnitten $P_1$ bis $P_4$ zugeordnet sind, durchlaufen, führt die THz-Subpulse seriell unter Beibehaltung ihres Zeitversatzes örtlich zusammen und bildet die Wellenformen der den vier Probenabschnitten zugeordneten THz-Subpulse seriell in Abschnitten von 25 ps Länge im abzutastenden Zeitbereich ab. Der Bereich mit auswertbarer Information verlängert sich somit, wie Fig. 6b zeigt, um den Abschnitt $Z$ auf 100 ps. Der auswertbare Messbereich wächst von 0,25 % auf 1 %, die Messgeschwindigkeit wächst um den Faktor 4. Durch die ortsaufgelöste Untersuchung der Probe in vier Probenabschnitten ist es möglich, einen hier im Probenabschnitt $P_3$ vorliegenden Fehler (Dünnstelle oder Loch) zu detektieren. Er ist an der Amplitude der Wellenform im zugehörigen Messfleck $M_3$ erkennbar, die im Vergleich zu den Amplituden in den anderen Messflecken stark erhöht ist. Mit einem herkömmlichen, nicht ortsauflösenden ASOPS-THz-Zeitbereichsspektrometer wäre dieser Fehler nicht lokalisierbar.

Ausführungsbeispiel 5

Ausführungsbeispiel 5 beschreibt besonders kompakt gestaltete Ausführungsformen der erfindungsgemäßen Optik 20, die mithilfe von THz-Umlenkspiegeln realisiert werden. Dabei werden bevorzugte Ausführungsformen gezeigt, bei denen die THz-Spiegel in örtlich versetzte Segmente zerlegt sind, sodass die Spiegelanordnung sowohl strahlumlenkend als auch strahlverzögernd wirkt und somit auch zur Erzeugung räumlich separierter, definiert zeitversetzter THz-Subpulse für ortsauflösende Messungen einsetzbar ist.

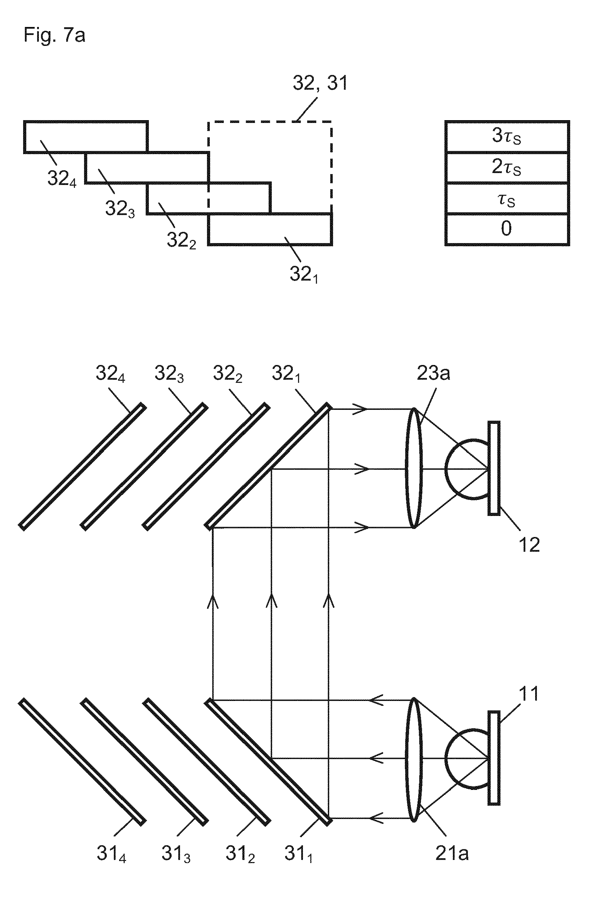

Fig. 7a zeigt eine schematische Darstellung einer solchen Optik 20 mit transmittierenden strahlformenden Komponenten 21 a, 23a und einer zweifach strahlumlenkenden Anordnung von THz-Spiegeln, wobei die THz-Spiegel 31, 32 bereits in jeweils vier streifenartige Segmente 31$_{1...4}$, 32$_{1...4}$ zerlegt sind, die vier unterschiedlich lange geometrische Strahlwege herstellen und somit die Zerlegung von geformten THz-Pulsen in Gruppen mit vier unterschiedlich zeitversetzten THz-Subpulsen realisieren. Die eigentliche Spiegelanordnung ist in 3-Tafel-Projektion dargestellt. Die Vorderansicht (unten) zeigt die Herstellung unterschiedlich langer Strahlwege durch die örtliche Versetzung der Segmente 31$_{1...4}$, 32$_{1...4}$ parallel zur Richtung des THz-Strahls. Der Übersichtlichkeit halber ist nur der Strahlweg über die Segmente 31$_1$ und 32$_1$ dargestellt. Wie die Draufsicht (oben links) zeigt, sind die Segmente 32$_{1...4}$ parallel zueinander positioniert, sodass sie sich nicht abschatten. Die Segmente 31$_{1...4}$ liegen deckungsgleich darunter. Die Seitenansicht (rechts oben) zeigt, dass auf diese Weise ein Messfeld erhalten wird, bestehend aus vier streifenartig verlängerten Messflecken, die von THz-Subpulsen mit vier verschiedenen Zeitversätzen durchlaufen werden. Vorzugsweise werden die Strahlwege in äquidistanten Schritten $\Delta l$ verlängert, sodass auch die Zeitversätze der THz-Subpulse einer Gruppe in konstanten Schritten $\tau_S = c \cdot \Delta l$ anwachsen. Mit der Spiegelanordnung in Fig. 7a sind somit an einer im Strahlengang angeordneten Probe Messungen mit 1-dimensionaler Ortsauflösung realisierbar. Der Vollständigkeit halber sind in Fig. 7a (Draufsicht) gestrichelt auch die Umrisse nicht segmentierter Spiegel 32 und 31 (deckungsgleich) eingezeichnet.

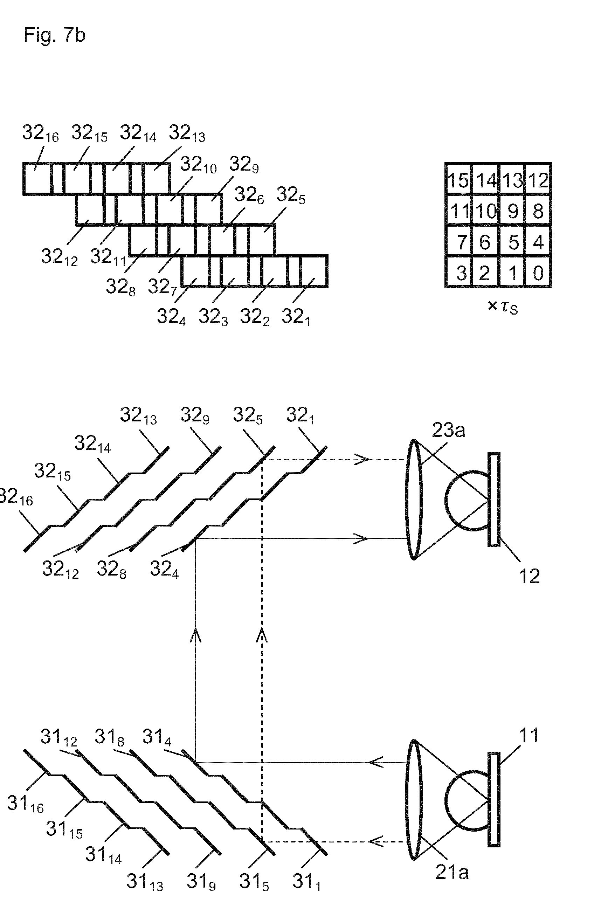

Fig. 7b zeigt eine vorteilhafte Weiterbildung der Anordnung von Fig. 7a. Hier sind die streifenartigen Segmente quer zur Streifenrichtung in vier kleinere Segmente zerlegt, die, wie die Vorderansicht unten zeigt, ebenfalls parallel zur Richtung des THz-Strahls in äquidistanten Schritten örtlich versetzt sind. Somit wird ein matrixartiges Messfeld mit 4x4 Messflecken erhalten, deren Zeitversätze sich, wie die Seitenansicht oben rechts zeigt, in konstanten Schritten $\tau_S$ erhöhen. (Der Zeitversatz $\tau_S$ hat hier nur ein Viertel des Wertes in

Fig. 7a, jedoch ist durch Streckung oder Stauchung der Segmentabstände ein beliebiger Wert von $\tau_S$ einstellbar.) Die Verbindungen der Segmente, die tangential vom THz-Strahl getroffen werden, sind optional. Somit sind mit dieser Anordnung Gruppen mit 16 definiert zeitversetzten, auf unterschiedlichen Strahlwegen verlaufenden, THz.-Subpulsen erzeugbar ($N$=16), die an einer im Strahlengang angeordneten Probe Messungen mit 2-dimensionaler Ortsauflösung erlauben.

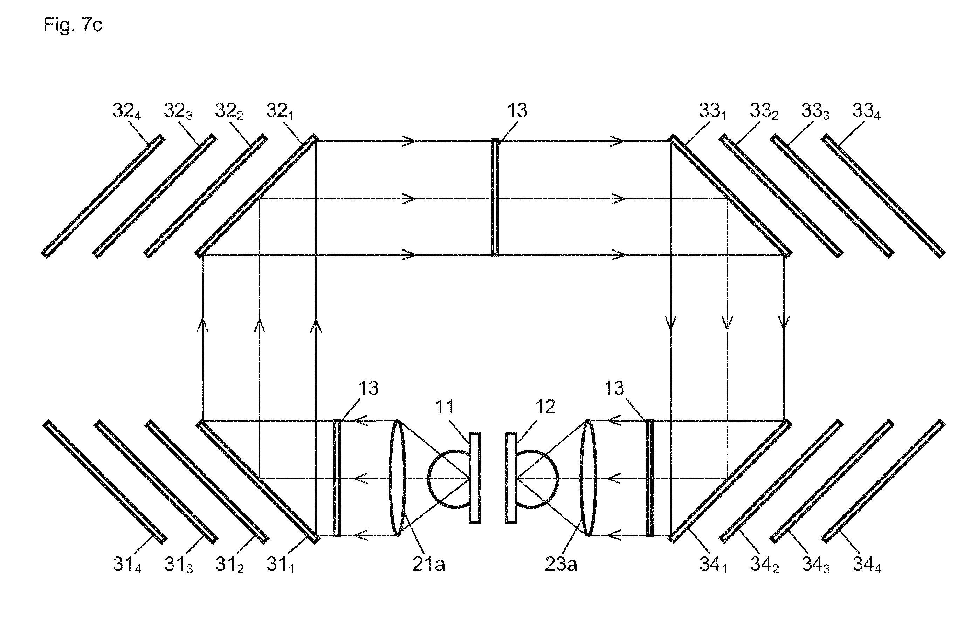

Fig. 7c zeigt eine 4-fach strahlumlenkende Anordnung mit Segmenten $31_{1...4}$, $32_{1...4}$ (wie in Fig. 7a) und spiegelsymmetrisch dazu positionierten Segmenten $33_{1...4}$, $34_{1...4}$ von THz-Spiegeln. Die Anordnung stellt ein Messfeld, bestehend aus vier streifenartig verlängerten Messflecken, bereit, wobei die Zeitversätze im Vergleich zu Fig. 7a verdoppelt sind. Diese Ausführungsform der Optik 20 bietet die Möglichkeit, die THz-Sender- und Empfängerantennen 11, 12 unmittelbar benachbart anzuordnen. Fig. 7c zeigt außerdem drei wahlweise nutzbare Positionen für eine Probe 13, die Messungen mit 1-dimensionaler Ortsauflösung unterzogen werden kann.

Weitere Modikationen der Anordnung in Fig. 7c sind möglich: Es genügt, nur eine Seite der 4-fach strahlumlenkenden Anordnung strahlverzögernd auszuführen, indem beispielsweise nur auf der linken Seite Segmente $31_{1...4}$, $32_{1...4}$ von THz-Spiegeln positioniert sind, während auf der rechten Seite nicht segmentierte THz-Spiegel 33, 34 angeordnet sind. (In diesem Fall erscheinen in Fig. 7c die THz-Spiegel 33 und 34 an den Positionen der Segmente $33_1$ und $34_1$, während die in Richtung des THz-Strahls versetzten Segmente $33_{1...4}$, $34_{1...4}$ entfallen.) Ferner kann die Anordnung in Fig. 7c 2-dimensional ortsauflösend ausgeführt werden, indem (anstelle der zweifachen Segmentierung in Fig. 7b) ein transmittierender Stufenkeil in den THz-Strahlengang eingebracht wird. Geeignet sind dazu die in Fig 7c waagerecht verlaufenden Strahlabschnitte, in denen auch die Proben 13 positionierbar sind. Es können auch mehrere Stufenkeile mit sich addierender Wirkung eingesetzt werden.

Die vorangehenden Ausführungsbeispiele sind nicht als abschließend zu betrachten. Vielmehr können sie in vielfacher Hinsicht sinnvoll kombiniert und auch erweitert werden. Insbesondere sind auch andere, in den Ausführungsbeispielen nicht verwendete Ausführungsformen von THz-Zeitbereichsspektrometern einsetzbar, z. B. ECOPS- und OSCAT-THz-Zeitbereichsspektrometer. Die in einigen Abbildungen eingezeichneten x-y-z-Koordinatensysteme dienen nur einer Erleichterung der Beschreibung. Andere Orientierungen der Anordnungen im Raum sind möglich. Dabei müssen die ausgezeichneten Richtungen (die Linie, entlang derer die Messflecken $M_1$ bis $M_N$ bei 1-dimensionaler Anordnung vorzugsweise angeordnet sind - vorab stets die x-Richtung, die Bewegungsrichtung einer Probe 13 - vorab stets die y-Richtung, sowie die Ausbreitungsrichtung der THz-Subpulse - vorab stets die z-Richtung) nicht zwingend orthogonal verlaufen. Beispielsweise kann die Probe 13 auch schräg zur Ausbreitungsrichtung der THz-Pulse bewegt werden, was für die Installation solcher Messeinrichtungen in Industrieanlagen mit geometrischen Beschränkungen eine wichtige Randbedingung ist.

Stets sind mehrere der in den Ausführungsbeispielen beschriebenen Messeinrichtungen zu einem Messsystem kombinierbar.

Dabei ist als besondere Ausführungsform auch ein Messsystem realisierbar, das mehrere THz-Senderantennen 11, aber nur eine THz-Empfängerantenne 12 aufweist.

## Abbildungslegenden

Fig. 1 a : Stand der Technik: THz-Zeitbereichsspektrometer 10 mit einem fs-Laser 15, einer mechanischen Verzögerungsstrecke 17 und einem x-y-Verschiebetisch 19 zum Abrastern einer Probe 13.

Fig. 1b: Stand der Technik: ASOPS-THz-Zeitbereichsspektrometer 10 mit zwei fs-Lasern 15, 15a und einem x-y-Verschiebetisch 19 zum Abrastern einer Probe 13.

Fig. 1c: Stand der Technik: Schematische Darstellung der örtlichen und zeitlichen Ausdehnung dreier aufeinanderfolgender THz-Pulse.

Fig. 2a: Schematische Darstellung der örtlichen und zeitlichen Ausdehnung dreier aufeinanderfolgender, durch Zerlegung der THz-Pulse in Fig. 1c erhaltener, identischer Gruppen von THz-Subpulsen.

Fig. 2b: Schematische Darstellung der Wellenformen dreier aufeinanderfolgender, identischer Gruppen von THz-Subpulsen, die im Sampling-Verfahren abzutasten sind.

Fig. 3: Schematische Darstellung einer Messeinrichtung, umfassend ein THz-Zeitbereichsspektrometer 10 mit einem fs-Laser 15, einer mechanischen Verzögerungsstrecke 17 und einer erfindungsgemäßen Optik 20 mit transmittierenden strahlformenden und strahlverzögernden Komponenten 21 a, 23a, 22a, geeignet zum Durchführen einer als bewegliches Endlosband ausgeführten Probe 13.

Fig. 4a: Schematische Darstellung einer weiteren Ausführungsform der erfindungsgemäßen Optik 20 mit reflektierenden strahlformenden Komponenten 21 b, 21b', 23b, 23b' und einer transmittierenden strahlverzögernden Komponente 22a.

Fig. 4b: Schematische Darstellung einer weiteren Ausführungsform der erfindungsgemäßen Optik 20 mit reflektierenden strahlformenden Komponenten 21 b, 23b und einer transmittierenden strahlverzögernden Komponente 22a.

Fig. 5: Schematische Darstellung einer weiteren Ausführungsform der erfindungsgemäßen Optik 20 mit transmittierenden strahlformenden Komponenten 21 a, 23a und einer reflektierenden strahlverzögernden Komponente 22b.

Fig. 6a: Schematische Darstellung einer Messeinrichtung mit einem ASOPS-THz-Zeitbereichsspektrometer 10 mit zwei fs-Lasern 15, 15a und einer erfindungsgemäßen Optik 20 mit transmittierenden strahlformenden und strahlverzögernden Komponenten 21 a, 23a, 22a, geeignet zum Durchführen einer als bewegliches Endlosband ausgeführten Probe 13.

Fig. 6b: Schematische Darstellung der mit einer Messeinrichtung gemäß Fig. 6a gemessenen Wellenformen zweier aufeinanderfolgender, identischer Gruppen von THz-Subpulsen, die im Sampling-Verfahren abzutasten sind.

Fig. 7a: Schematische Darstellung einer weiteren Ausführungsform der erfindungsgemäßen Optik 20 mit transmittierenden strahlformenden Komponenten 21 a, 23a und umlenkenden und strahlverzögernden Spiegeln $31_i$, $32_i$ (1-dimensionale Ortsauflösung, 2-fache Strahlumlenkung).

Fig. 7b: Schematische Darstellung einer weiteren Ausführungsform der erfindungsgemäßen Optik 20 mit transmittierenden strahlformenden Komponenten 21 a, 23a und umlenkenden und strahlverzögernden Spiegeln $31_i$, $32_i$ (2-dimensionale Ortsauflösung, 2-fache Strahlumlenkung).

Fig. 7c: Schematische Darstellung einer weiteren Ausführungsform der erfindungsgemäßen Optik 20 mit transmittierenden strahlformenden Komponenten 21 a, 23a und umlenkenden und strahlverzögernden Spiegeln $31_i$, $32_i$, $33_i$, $34_i$ (1-dimensionale Ortsauflösung, 4-fache Strahlumlenkung).

**Bezugszeichenliste**

| | |
|---|---|
| 0 | - Folge der optischen Ausgangspulse 0', 0",... |
| 1 | - Folge der optischen Anregepulse 1', 1 ",... |
| 2 | - Folge der optischen Abfragepulse 2', 2",... |
| 3 | - Folge der THz-Pulse 3', 3",... |
| $3'_1$... | - THz-Subpulse |
| 10 | - THz-Zeitbereichsspektrometer |
| 11 | - THz-Senderantenne |
| 12 | - THz-Empfängerantenne |
| 13 | - Probe |
| 14 | - Steuer-, Mess- und Auswerteelektronik |
| 15 | - fs-Laser |
| 15a | - zweiter fs-Laser (nur bei ASOPS) |
| 16 | - Strahlteiler |
| 17 | - Verzögerungsstrecke |
| 18 | - Umlenkspiegel im optischen Pfad |
| 18b | - Parabolspiegel im THz-Pfad |
| 18c | - strahlfokussierende Linsen im THz-Pfad |
| 19 | - x-y-Verschiebetisch |
| 20 | - Optik |
| 21 | - erste strahlformende Komponente, ausgeführt als |
| 21a | - transmittierende Komponente |
| 21b | - reflektierende Komponente (mit optionalem Umlenkspiegel 21 b') |
| 22 | - strahlverzögernde Komponente, ausgeführt als |
| 22a | - transmittierende Komponente |
| 22b | - reflektierende Komponente |
| 23 | - zweite strahlformende Komponente, ausgeführt als |
| 23a | - transmittierende Komponente |
| 23b | - reflektierende Komponente (mit optionalem Umlenkspiegel 23b') |
| 31,..., 34 | - umlenkende THz-Spiegel, ggf. zerlegt in |
| $31_i$,..., $34_i$ | - umlenkende und definiert strahlverzögernde Segmente ($i$=1...N) |
| $M_i$ | - örtlich separierte Messflecke $M_1$ bis $M_N$ |
| $P_i$ | - örtlich separierte Probenabschnitte $P_1$ bis $P_N$ |
| G | - Gruppe von THz-Subpulsen, z. B. $3'_1$, $3'_2$, $3'_3$, $3'_4$ |
| TF | - Teilfolge von THz-Subpulsen, z. B. $3'_1$, $3''_1$,$3'''_1$,... |
| WF | - Wellenform |

**Formelzeichen**

| | |
|---|---|
| $f_{rep}$ | - Repetitionsrate des fs-Lasers (bei THz-TDS mit nur einem fs-Laser) |
| $f_1$, $f_2$ | - Repetitionsraten der beiden fs-Laser (bei ASOPS-THz-TDS) |
| $\Delta f$ | - Änderung der Repetitionsrate $f_{rep}$ in Folge 2 durch die Verzögerungsstrecke 17 (bei THz-TDS mit nur einem fs-Laser) bzw. Differenz der Repetitionsraten $f_1$ - $f_2$ (bei ASOPS-THz-TDS) |
| $\tau_{rep}$ | - Repetitionsdauer des fs-Lasers (bei THz-TDS mit nur einem fs-Laser) |
| $\tau_1$, $\tau_2$ | - Repetitionsdauern der beiden fs-Laser (bei ASOPS-THz-TDS) |
| $\Delta\tau$ | - Schrittweite der mit der Verzögerungsstrecke 17 erzeugten Zeitverzögerung (bei THz-TDS mit nur einem fs-Laser) bzw. Differenz der Repetitionsdauern $\tau_2$-$\tau_1$ (bei ASOPS-THz-TDS) |
| $\tau_L$ | - Dauer eines THz-Pulses (= Dauer eines THz-Subpulses) |
| $\tau_S$ | - Zeitversatz zweier aufeinanderfolgender THz-Subpulse derselben Gruppe |
| $\Delta l$ | - Schrittweite der geometrischen Strahlwege bei Verwendung der Segmente $31_i$... |

$T$   - mittels Sampling-Verfahren abzutastender Zeitbereich

$A$   - Zeitbereich mit auswertbarer Information (ASOPS, Stand der Technik)

$Z$   - zusätzlicher Zeitbereich mit auswertbarer Information (ASOPS, kombiniert mit der Erfindung)

$N$   - Anzahl der Teilfolgen von THz-Subpulsen=Anzahl der THz-Subpulse in einer Gruppe=Anzahl der Messflecke

$L$   - Länge des Strahlquerschnitts des THz-Strahls

$B$   - Breite des zu untersuchenden Probenbereiches

$B_S$   - Breite der Stufen im Stufenkeil

$H_S$   - Höhe der Stufen im Stufenkeil

$n$   - Brechungsindex der strahlverzögernden Komponente 22a

$n_U$   - Brechungsindex der Umgebung

$\Delta n$   - Differenz $n\text{-}n_U$ dieser Brechungsindizes

$c$   - Lichtgeschwindigkeit in der Umgebung ($\approx$Vakuumlichtgeschwindigkeit)

$t$   - Zeit

$\alpha$   - Einfallswinkel des THz-Strahls auf die strahlverzögernde Komponente 22

$x, y$   - Koordinaten senkrecht zur THz-Strahlrichtung

$z$   - Koordinate parallel zur THz-Strahlrichtung

**Patentansprüche**

1. Verfahren für die THz-Zeitbereichsspektroskopie, geeignet zur ortsaufgelösten Untersuchung einer in einem THz-Strahlengang anordenbaren Probe (13), bei dem eine Folge (1) von optischen Anregepulsen (1', 1 ", 1"',...) und eine mit dieser korrelierte Folge (2) von optischen Abfragepulsen (2', 2", 2"',...), erzeugt werden, sodass jeweils ein Puls aus beiden Folgen (1, 2) ein Pulspaar (1',2'; 1 ",2"; 1"',2"';...) mit einer definierten Zeitverzögerung bildet, die über einen zu messenden Zeitbereich T durchgestimmt wird, wobei die Folge (1) der optischen Anregepulse (1', 1 ", 1"',...) eine mit dieser Folge korrelierte Folge (3) von THz-Pulsen (3', 3", 3"',...) generiert, **dadurch gekennzeichnet, dass**

   (i) THz-Pulse der Folge (3) von THz-Pulsen (3',3",3"',...) einer ersten Strahlformung unterzogen werden,

   (ii) dass die geformten THz-Pulse (3',3",3"',...) in Gruppen mit einer Anzahl $N\geq2$ von THz-Subpulsen (3'$_1$, 3'$_2$,..., 3'$_N$; 3"$_1$, 3"$_2$,..., 3"$_N$; 3"'$_1$, 3"'$_2$..., 3"'$_N$;...) zerlegt werden, wobei sich die $N$ THz-Subpulse derselben Gruppe auf $N$ räumlich separierten Strahlwegen bewegen und $N$ definierte, mit den $N$ räumlich separierten Strahlwegen korrelierte, Zeitversätze erhalten, sodass die THz-Subpulse $N$ Teilfolgen (3'$_1$, 3"$_1$, 3"'$_1$,...; 3'$_2$, 3"$_2$, 3"'$_2$,...; ...; 3'$_N$, 3"$_N$, 3"'$_N$,...) bilden, die sich auf den $N$ räumlich separierten Strahlwegen bewegen, wobei jede Teilfolge genau einen THz-Subpuls aus jeder Gruppe enthält,

   (iii) die THz-Subpulse (3'$_1$, 3'$_2$,..., 3'$_N$; 3"$_1$, 3"$_2$,..., 3"$_N$; 3"'$_1$, 3"'$_2$..., 3"'$_N$;...) einer zweiten Strahlformung unterzogen werden, bei der sie seriell unter Beibehaltung ihres Zeitversatzes örtlich zusammengeführt werden,

   (iv) die im Zeitbereich $T$ seriell angeordneten $N$ Wellenformen der THz-Subpulse in den $N$ Teilfolgen (3'$_1$, 3"$_1$, 3"'$_1$,...; 3'$_2$, 3"$_2$, 3"'$_2$,...; ...; 3'$_N$, 3"$_N$, 3"'$_N$,...) durch Abtastung im Zeitbereich $T$ mithilfe der Pulse (2', 2", 2"',...) der Folge (2) der optischen Abfragepulse gemessen werden.

2. Verfahren nach Anspruch 1, **dadurch gekennzeichnet, dass** im Schritt (i) eine kollimierende Strahlformung der THz-Pulse erfolgt.

3. Verfahren nach Anspruch 1 oder 2, **dadurch gekennzeichnet, dass** die $N$ räumlich separierten Strahlwege parallel zueinander in einer Richtung versetzt sind oder dass die N räumlich separierten Strahlwege parallel zueinander in zwei verschiedenen Richtungen versetzt sind.

4. Optik (20) zur Realisierung der Schritte (i) bis (iii) des Verfahrens nach den Ansprüchen 1, 2 oder 3, **gekennzeichnet durch** eine erste strahlformende Komponente (21) zur Formung, vorzugsweise Kollimierung, einer von einer THz-Senderantenne (12) abgestrahlten Folge von THz-Pulsen (3', 3", 3"',...), eine strahlverzögernde Komponente (22) mit $N\geq2$ Abschnitten verschiedener Weglänge zur Zerlegung dieser THz-Pulse in $N$ sich auf räumlich separierten Strahlwegen bewegende, definiert zeitversetzte THz-Subpulse, und eine zweite strahlformende Komponente (23) zur Fokussierung der THz-Subpulse auf eine Empfängerantenne (12), wobei zwischen der ersten strahlformenden Komponente (21) und der zweiten strahlformenden Komponente (22) eine Probe (13) anordenbar ist.

5. Optik (20) nach Anspruch 4, **dadurch gekennzeichnet, dass** die strahlverzögernde Komponente (22) als transmittierende Komponente (22a) in Form eines Stufenkeils mit $N$ Stufen, die entlang einer schräg, vorzugsweise senkrecht, zum THz-Strahlengang gerichteten Linie oder Ebene verteilt sind, bestehend aus einem für THz-Strahlung transparenten Material mit einem Brechungsindex $n$, der sich von dem Brechungsindex der Umgebung $n_U$ unterscheidet, ausgeführt ist, die den geformten THz-Strahlengang in $N$ räumlich separierte Strahlwege mit unterschiedlicher optischer Weglänge teilt.

6. Optik (20) nach Anspruch 4, **dadurch gekennzeichnet, dass** die strahlverzögernde Komponente (22) als reflektierende Komponente (22b) in Form eines THz-Strahlung reflektierenden Stufenkeils mit *N* Stufen, die entlang einer schräg zum THz-Strahlengang stehenden, vorzugsweise um einen kleinen Einfallswinkel α gegenüber dem THz-Strahlengang geneigten, Linie oder Ebene angeordnet sind, oder in Form von N entlang einer solchen Linie oder Ebene angeordneten Spiegeln, deren reflektierende Flächen stufenartig um unterschiedliche Höhen gegenüber der Linie oder Ebene versetzt sind, ausgeführt ist, die den geformten THz-Strahlengang umlenkt und in N räumlich separierte Strahlwege mit unterschiedlicher geometrischer Weglänge teilt.

7. Optik (20) nach einem der Ansprüche 4 bis 6, **dadurch gekennzeichnet, dass** die strahlformenden Komponenten (21, 23) als THz-Linsen (21 a, 23a) oder als THz-Spiegel (21 b, 21 b', 23b, 23b') ausgeführt sind.

8. Messeinrichtung zur Durchführung des Verfahrens nach den Ansprüchen 1, 2 oder 3, umfassend ein THz-Zeitbereichsspektrometer (10), das in einer beliebigen bekannten Ausführungsform vorliegen kann, darunter in den Ausführungsformen

   (i) mit einem fs-Laser (15), einem Strahlteiler (16) und einer Verzögerungsstrecke (17),
   (ii) als ASOPS-THz-Zeitbereichsspektrometer mit zwei gegeneinander verstimmten fs-Lasern (15, 15a),
   (iii) als ECOPS-THz-Zeitbereichsspektrometer,
   (iv) als OSCAT-THz-Zeitbereichsspektrometer,

   aufweisend eine Vorrichtung zur Erzeugung einer Folge (1) von optischen Anregepulsen (1', 1 ", 1"',...) und einer mit dieser Folge korrelierten Folge (2) von optischen Abfragepulsen (2', 2", 2"',...), eine durch die Folge (1) von optischen Anregepulsen ansteuerbare THz-Senderantenne (11), mit der eine mit der Folge (1) von optischen Anregepulsen (1', 1 ", 1"',...) korrelierte Folge (3) von THz-Pulsen (3', 3", 3"',...) generierbar ist, eine in Ausbreitungsrichtung der THz-Pulse angeordnete, durch die Folge (2) von optischen Abfragepulsen schaltbare, THz-Empfängerantenne (12), mit der die Wellenform einlaufender THz-Pulse abtastbar ist, eine Mess-, Steuer- und Auswerteelektronik (14) zur Rekonstruktion, Speicherung und Analyse der abgetasteten Wellenform, **dadurch gekennzeichnet, dass** zwischen der THz-Senderantenne (11) und der THz-Empfängerantenne (12) eine Optik (20) nach einem der Ansprüche 4 bis 7 angeordnet ist.

9. Messeinrichtung nach Anspruch 8, **dadurch gekennzeichnet, dass** Komponenten der Optik (20) teilweise oder ganz in die THz-Senderantenne (11) und/oder die THz-Empfängerantenne (12) integriert sind.

10. Messsystem, **dadurch gekennzeichnet, dass** es mehrere Messeinrichtungen gemäß einem der Ansprüche 8 oder 9 aufweist, die parallel unmittelbar nebeneinander angeordnet sind und gleichzeitig betreibbar sind.

11. Verwendung des Verfahrens nach Anspruch 1, 2 oder 3 und/oder der Messeinrichtung nach den Ansprüchen 8 oder 9 und/oder des Messsystems nach Anspruch 10 zur schnellen ortsaufgelösten zerstörungsfreien Qualitätskontrolle von großtechnisch hergestellten Produkten.

12. Verwendung nach Anspruch 11, **dadurch gekennzeichnet, dass** eine Inline-Fehlererkennung in die Messeinrichtung oder das Messsystem durchlaufenden Papier- und/oder Kunststoff-Endlosbahnen erfolgt.

Fig. 1a (Stand der Technik)

Fig. 1b (Stand der Technik)

18

Fig. 1c (Stand der Technik)

Fig. 2a

Fig. 2b

Fig. 3

EP 2 913 665 A1

20

Fig. 4a

Fig. 4b

Fig. 5

Fig. 6a

Fig. 6b

Fig. 7a

32, 31

32₄
32₃
32₂
32₁

3τₛ
2τₛ
τₛ
0

32₄   32₃   32₂   32₁          23a

                                        12

                                        11

31₄   31₃   31₂   31₁          21a

Fig. 7b

EP 2 913 665 A1

Fig. 7c

Europäisches
Patentamt

European
Patent Office

Office européen
des brevets

**EUROPÄISCHER RECHERCHENBERICHT**

Nummer der Anmeldung

EP 14 15 6712

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MAN ZHANG ET AL: "A Compressed Terahertz Imaging Method", CHINESE PHYSICS LETTERS, Bd. 29, Nr. 10, 104208, 2012, Seiten 104208-1-104208-4, XP055127644, ISSN: 0256-307X, DOI: 10.1088/0256-307X/29/10/104208 | 1-5,7-10 | INV. G01N21/89 G01N21/35 G01J3/02 G01J3/42 G02F1/35 |
| Y | * Seite 1, Spalte 1, Zeile 22 - Spalte 2, Zeile 14; Abbildungen 1-4 * ----- | 6,11,12 | |
| Y | MAIK SCHELLER ET AL: "Terahertz quasi-time-domain spectroscopy imaging", APPLIED OPTICS, OPTICAL SOCIETY OF AMERICA, Bd. 50, Nr. 13, 2011, Seiten 1884-1888, XP001563116, WASHINGTON, DC; US ISSN: 0003-6935, DOI: 10.1364/AO.50.001884 [gefunden am 2011-04-28] * Absatz [001.] - Absatz [003.]; Abbildungen 1,2 * ----- | 8,11,12 | |
| Y | YAN LIHE ET AL: "Multi-Frame Observation of a Single Femtosecond Laser Pulse Propagation Using an Echelon and Optical Polarigraphy Technique", IEEE PHOTONICS TECHNOLOGY LETTERS, IEEE SERVICE CENTER, PISCATAWAY, NJ, US, Bd. 25, Nr. 19, 2013, Seiten 1879-1881, XP011526528, ISSN: 1041-1135, DOI: 10.1109/LPT.2013.2278883 [gefunden am 2013-09-09] * Zusammenfassung; Abbildungen 1-4 * ----- -/-- | 8,11,12 | |

RECHERCHIERTE SACHGEBIETE (IPC)

G01N
G01J
G02F

Der vorliegende Recherchenbericht wurde für alle Patentansprüche erstellt

| Recherchenort | Abschlußdatum der Recherche | Prüfer |
|---|---|---|
| München | 31. Juli 2014 | Consalvo, Daniela |

EPO FORM 1503 03.82 (P04C03)

Europäisches Patentamt

European Patent Office

Office européen des brevets

**EUROPÄISCHER RECHERCHENBERICHT**

Nummer der Anmeldung

EP 14 15 6712

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | YASUO MINAMI ET AL: "Single-shot measurement of a terahertz electric-field waveform using a reflective echelon mirror", APPLIED PHYSICS LETTERS, Bd. 103, Nr. 5, 051103, 2013, Seiten 1-5, XP055127650, ISSN: 0003-6951, DOI: 10.1063/1.4817011 * Zusammenfassung * * Abbildung 1 * ----- | 6 | |
| Y | P.U. JEPSEN ET AL: "Terahertz spectroscopy and imaging - Modern techniques and applications", LASER & PHOTONICS REVIEWS, Bd. 5, Nr. 1, 4. Oktober 2010 (2010-10-04) , Seiten 124-166, XP055127649, ISSN: 1863-8880, DOI: 10.1002/lpor.201000011 | 11,12 | |
| A | * Absätze [06.3], [06.6] * ----- | 1-10 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 31. Juli 2014 | Consalvo, Daniela |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2505986 A1

**In der Beschreibung aufgeführte Nicht-Patentliteratur**

- **S. SCHUMANN U. A.** Spectrum to space transformed fast terahertz imaging. *Opt. Express,* 2012, vol. 20, 19200-19205